# EUROPÄISCHE PATENTSCHRIFT

(11) **EP 4 222 004 B1**
(45) Veröffentlichungstag und Bekanntmachung des Hinweises auf die Patenterteilung: **10.06.2026**
(21) Anmeldenummer: 21785793.7
(22) Anmeldetag: 23.09.2021
(51) Int. Cl.: B60D 1/64

(54) **EINBAUEINHEIT**
INSTALLATION UNIT
UNITÉ D'INSTALLATION

(30) Priorität: 30.09.2020 DE 102020125607
(43) Veröffentlichungstag der Anmeldung: 09.08.2023
(73) Patentinhaber: ACPS Automotive GmbH, 74379 Ingersheim (DE)
(72) Erfinder: KADNIKOV, Aleksej, 71229 Leonberg (DE)
(74) Vertreter: Hoeger, Stellrecht & Partner Patentanwälte mbB
(86) Internationale Anmeldenummer: PCT/EP2021/076232
(87) Internationale Veröffentlichungsnummer: WO 2022/069344

(56) Entgegenhaltungen:
- EP-A1- 2 952 367
- EP-A1- 3 819 138
- DE-U1- 202006 012 577
- DE-U1- 29 800 542
- US-A1- 2016 069 923

## Beschreibung

Die Erfindung betrifft eine Einbaueinheit für ein an einer Karosserie eines Kraftfahrzeugs angeordnetes Trägerelement einer Trägereinheit, wobei die Einbaueinheit eine Steckdose für einen mit dem Kraftfahrzeug verbindbaren Anhänger oder einen Lastenträger und/oder eine Steuereinheit für eine Komponente der Trägereinheit und/oder des Anhängers und/oder Lastenträgers umfasst, wobei die Einbaueinheit ein Gehäuse mit einem sich auf einer ersten Außenseite an einem Aufnahmebereich des Trägerelements abstützenden ersten Gehäuseabschnitt und einem in eine Aufnahme des Aufnahmebereichs des Trägerelements eingreifenden zweiten Gehäuseabschnitt sowie eine sich bei in der Aufnahme montierter Einbaueinheit an dem Aufnahmebereich abstützende Fixiereinheit umfasst, wobei die Fixiereinheit bei an dem Aufnahmebereich fixierter Einbaueinheit mit dem Gehäuse, insbesondere mit dem zweiten Gehäuseabschnitt, verbunden ist.

Eine derartige Einbaueinheit ist aus der EP 2 952 367 A1 bekannt.

Bei derartigen Einbaueinheiten ist ein möglichst einfacher Einbau in der Aufnahme des Trägerelements angestrebt.

Eine derartige Lösung lässt sich besonders einfach und kostengünstig realisieren.

Die eingangs genannte Aufgabe wird gemäß einer ersten Ausführungsform erfindungsgemäß dadurch gelöst, dass an dem Gehäuse, insbesondere an dem zweiten Gehäuseabschnitt, mindestens ein Vorsprung angeordnet, der in eine in dem Aufnahmebereich, insbesondere in der Aufnahme, angeordnete Ausnehmung eingreift, um das Gehäuse an dem Aufnahmebereich definiert zu fixieren, und das Gehäuse drehfest an dem Aufnahmebereich festlegt, so dass dadurch eine eindeutige Orientierung des Gehäuses an dem Aufnahmebereich vorgebbar ist, dass das Gehäuse, insbesondere der zweite Gehäuseabschnitt desselben, mit der Fixiereinheit an dem Aufnahmebereich gegen eine Bewegung entgegengesetzt zur Einschieberichtung abgestützt ist, dass die Fixiereinheit ein sich an einer zweiten, der ersten Außenseite gegenüberliegenden, Außenseite des Aufnahmebereichs abstützendes Fixierelement umfasst, dass das Fixierelement Halteanker umfasst, die sich zwischen dem zweiten Gehäuseabschnitt und einer Innenwand des Aufnahmekanals der Aufnahme erstrecken und an Lageraufnahmen des Gehäuses fixierbar sind, insbesondere bei an dem Aufnahmebereich fixierter Einbaueinheit fixiert sind, dass die Fixiereinheit zur Fixierung des Auflagekörpers Schraubanker umfasst, die sich zwischen dem zweiten Gehäuseabschnitt und einer Innenwand des Aufnahmekanals der Aufnahme erstrecken und endseitig in Lageraufnahmen des Gehäuses eingreifen, und dass der mindestens eine Vorsprung des zweiten Gehäuseabschnitts als eine der Lageraufnahmen ausgebildet ist, wobei es besonders zweckmäßig ist, wenn jeder der Vorsprünge des zweiten Gehäuseabschnitts gleichzeitig als Lageraufnahme ausgebildet ist.

Der mindestens eine Vorsprung könnte theoretisch an beliebiger Stelle des Gehäuses, insbesondere des zweiten Gehäuseabschnitts, angeordnet sein.

Besonders vorteilhaft ist es, wenn der mindestens eine Vorsprung an dem zweiten Gehäuseabschnitt im Anschluss an den ersten Gehäuseabschnitt angeformt ist, um somit die drehfeste Festlegung des Gehäuses nahe des ersten Gehäuseabschnitts zu erreichen.

Noch besser ist es, wenn an dem Gehäuse, insbesondere an dem zweiten Gehäuseabschnitt, mehrere Vorsprünge angeordnet sind, von denen jeder in eine an dem Aufnahmebereich, insbesondere in der Aufnahme, angeordnete Ausnehmung eingreift.

Insbesondere ist vorteilhafterweise vorgesehen, dass die Halteanker endseitig mit Rastelementen versehen sind, die im fixierten Zustand der Einbaueinheit in der jeweiligen Lageraufnehme angeordnete Rastaufnahmen eingreifen.

Diese Rastaufnahmen sind insbesondere so ausgebildet, dass sie mit den Rastelementen zusammenwirken und dabei in einfacher Weise in unterschiedlichen Rastpositionen relativ zueinander fixierbar sind, um in einfacher Weise Einbautoleranzen im Aufnahmebereich ausgleichen zu können, die sich dadurch ergeben, dass das Fixierelement aufgrund dieser Einbautoleranzen in geringfügig unterschiedlichen Abständen von den Lageraufnahmen anzuordnen ist.

Im einfachsten Fall ist das Fixierelement so ausgebildet, dass dieses einen Auflagekörper umfasst, der insbesondere als Ringkörper ausgebildet ist und insbesondere radial außerhalb des zweiten Gehäuseabschnitts an dem Aufnahmebereich anlegbar ist.

Zur sicheren Fixierung des Auflagekörpers ist der Auflagekörper mit Auflagevorsprüngen versehen, die so ausgebildet sind, dass sie im montierten Zustand der Einbaueinheit an der zweiten Außenseite des Aufnahmebereichs anliegen und sich an diesem abstützen.

In diesem Fall ist vorzugsweise vorgesehen, dass die Schraubanker in in den Lageraufnahmen des Gehäuses angeordnete Schraubaufnahmen einschraubbar sind.

Hinsichtlich der Lageraufnahmen wurden bislang keine näheren Angaben gemacht.

Grundsätzlich können die Lageraufnahmen beispielsweise an dem ersten Gehäuseabschnitt angeordnet oder beispielsweise auch in diesem integriert sein.

Eine besonders vorteilhafte Lösung sieht vor, dass die Lageraufnahmen an dem zweiten Gehäuseabschnitt angeordnet sind.

Hinsichtlich der Ausbildung des Auflagekörpers wurden bislang keine näheren Angaben gemacht.

Dieser könnte sich prinzipiell in einer parallel zu der zweiten Außenseite verlaufenden Fläche erstrecken.

Eine vorteilhafte Lösung sieht vor, dass der Auflagekörper in Richtung einer dem ersten Gehäuseabschnitt abgewandten Zugangsseite des zweiten Gehäuseabschnitts gewölbt ist und dass die Halteanker oder Schraubanker in den Bereichen des Auflagekörpers mit dem größten Abstand von der Zugangsseite an diesem angreifen.

Diese Lösung hat den Vorteil, dass damit zwangsläufig der Auflagekörper auch in Richtung der zweiten Außenseite des Aufnahmebereichs gewölbt ist und dadurch mit den zwischen den Halteankern oder Schraubankern liegenden Bereichen zunächst an dieser Außenseite des Aufnahmebereichs anliegt und durch zunehmendem Zug seitens der Halteanker oder Schraubanker mit Vorspannung an der Außenseite des Aufnahmebereichs anlegbar ist.

Die eingangs genannte Aufgabe wird gemäß einer zweiten Ausführungsform erfindungsgemäß dadurch gelöst, dass das Fixierelement mit Fixierzungen versehen ist, welche an einem Fixierabschnitt des zweiten Gehäuseabschnitts festlegbar ist, so dass dadurch eine sehr einfache Fixierung des Fixierelements an dem zweiten Gehäuseabschnitt realisierbar ist, und dass bei an dem Aufnahmebereich fixierter Einbaueinheit der zweite Gehäuseabschnitt mit dem Fixierabschnitt über die zweite Außenseite des Aufnahmebereichs übersteht.

Darüber hinaus ist vorzugsweise das Fixierelement so ausgebildet, dass das Fixierelement einen sich ungefähr parallel zu einer quer zur Mittelachse verlaufenden Ebene erstreckenden Flachbereich aufweist, der die sich radial zur Mittelachse erstreckenden Fixierzungen trägt.

Der Flachbereich kann dabei in unterschiedlichster Art und Weise ausgebildet sein.

Eine vorteilhafte Lösung sieht vor, dass der Flachbereich im an dem Aufnahmebereich montierten Zustand der Einbaueinheit an der zweiten Außenseite anliegt, so dass der Flachbereich gleichzeitig den Auflagekörper bildet.

Um mit dem Fixierelement in diesem Fall gleichzeitig eine Kabelzuführung in Anlage an dem Trägerelement halten zu können, ist vorzugsweise vorgesehen, dass das Fixierelement einen Haltebügel aufweist, der eine Kabelzuführung übergreift und dabei diese ebenfalls an dem Trägerelement anlegen kann.

Eine weitere alternative der erfindungsgemäßen Lösung der eingangs genannten Aufgabe sieht vor, dass die Fixiereinheit einen Bajonettverschluss und einen Fixierflansch umfasst, mit welchem der Fixierflansch an dem zweiten Gehäuseabschnitt fixierbar ist.

Dabei ist der Fixierflansch beispielsweise an einem Abschlussdeckel für den zweiten Gehäuseabschnitt angeordnet.

Auch in diesem Fall ist vorzugsweise vorgesehen, dass bei an der Aufnahme montierter Einbaueinheit der Fixierflansch an der zweiten Außenseite des Aufnahmebereichs anliegt.

Die eingangs genannte Aufgabe wird gemäß einer dritten Ausführungsform erfindungsgemäß dadurch gelöst, dass die Fixiereinheit an dem zweiten Gehäuseabschnitt gehaltene Fixiervorsprünge umfasst und dass die Fixiervorsprünge durch elastische Deformation zumindest in Richtung einer Umlaufrichtung um den zweiten Gehäuseabschnitt relativ zu diesem bewegbar sind.

In diesem Fall besteht zweckmäßigerweise die Möglichkeit, dass das Gehäuse im an dem Aufnahmebereich eingebauten Zustand sich mittels der Fixiervorsprünge an einer Stufe am Aufnahmebereich, insbesondere in der Aufnahme, abstützt.

Dies lässt sich insbesondere vorteilhafterweise dadurch erreichen, dass die Fixiervorsprünge sich selbsttätig in eine Abstützstellung bewegend ausgebildet sind, in welcher sie sich mit einer Abstützseite an der Stufe des Aufnahmebereichs abstützen.

Besonders einfach lässt sich dies dadurch realisieren, dass die Fixiervorsprünge einstückig an den zweiten Gehäuseabschnitt angeformt sind.

Insbesondere ist hierbei vorgesehen, dass die Fixiervorsprünge sich sowohl in einer radialen Richtung und/oder einer Umlaufrichtung um den zweiten Gehäuseabschnitt erstrecken.

Insbesondere ist es zweckmäßigerweise vorgesehen, dass die Fixiervorsprünge durch elastische Deformation zumindest in radialer Richtung relativ zu dem zweiten Gehäuseabschnitt bewegbar sind.

Eine technisch besonders günstige Gestaltung sieht vor, dass die Fixiervorsprünge in Form von sich quer zu einer Stufenfläche der Stufe erstreckenden Lamellen ausgebildet sind, die an ihrer Längsseite mit dem zweiten Gehäuseabschnitt verbunden sind.

Besonders günstig ist es hierbei, wenn die Lamellen sich quer zur Längsseite erstreckende Abstützkanten aufweisen, mit welchen sich diese auf der Stufenfläche des Aufnahmebereichs abstützen.

Wenn die Fixiervorsprünge insbesondere mit den Abstützkanten eine definierte Lage relativ zum ersten Gehäuseabschnitt aufweisen, würde sich das Problem stellen, dass kein Toleranzausgleich zwischen der Stufe, insbesondere der Stufenfläche derselben, und der ersten Außenseite des Aufnahmebereichs, welche die Lage des ersten Gehäuseabschnitts vorgibt, bestehen würde.

Aus diesem Grund sieht eine vorteilhafte Lösung vor, dass bei einer Vielzahl von Fixiervorsprüngen unterschiedliche der Fixiervorsprünge mit ihren Abstützkanten in unterschiedlichen Abständen von dem ersten Gehäuseabschnitt angeordnet sind.

Damit besteht die Möglichkeit, durch die Vielzahl der Fixiervorsprünge unterschiedliche Toleranzen zwischen der Stufe und der Stufenfläche dadurch auszugleichen, dass mindestens ein Teil der Fixiervorsprünge in der Lage ist, beim Einsetzen der Einbaueinheit bei Erreichen der Stufe sich radial auszudehnen und sich auf der Stufenfläche mit der Abstützkante abzustützen.

Darüber hinaus ist vorzugsweise vorgesehen, dass die Fixiervorsprünge quer zur Längsseite verlaufende Einschwenkkanten aufweisen, welche beim Anliegen an eine Innenwand des Aufnahmekanals die Fixiervorsprünge in radialer Richtung und/oder Umlaufrichtung deformieren, um den zweiten Gehäuseabschnitt mit den Fixiervorsprüngen durch den Aufnahmekanal von der ersten Aufnahmeseite bis zur Stufe des Aufnahmebereichs, insbesondere in der Aufnahme, zu bewegen.

Die eingangs genannte Aufgabe wird gemäß einer vierten Ausfürhungsform erfindungsgemäß dadurch gelöst, dass die Fixereinheit eine Vielzahl von Fixierzungen umfasst, die an dem zweiten Gehäuseabschnitt gehalten sind, dass die Fixierzungen in radialer Richtung zu einer Mittelachse des zweiten Gehäuseabschnitts durch einen Keilkörper beaufschlagbar und dadurch an dem Aufnahmebereich, insbesondere an einer Innenwand des Aufnahmekanals, anlegbar und mit dieser verkeilbar sind.

Hierzu ist vorzugsweise die Innenwand des Aufnahmekanals sich im Anlagebereich der Fixierzungen erweiternd, insbesondere in Richtung der zweiten Außenseite konisch erweiternd, ausgebildet.

Vorzugsweise sind dabei die Fixierzungen einstückig an den zweiten Gehäuseabschnitt angeformt.

Hinsichtlich der Ausrichtung der Fixierzungen wurden bislang keine näheren Angaben gemacht.

So sieht eine vorteilhafte Lösung vor, dass die Fixierzungen sich ungefähr parallel zur Einschieberichtung und somit insbesondere auch parallel zur Mittelachse erstrecken.

Eine weitere vorteilhafte Lösung sieht vor, dass der Keilkörper als Ringkörper ausgebildet ist, wobei dabei der Keilkörper nicht zwangsläufig ein geschlossener Ringkörper sein muss, sondern auch ein offener Ringkörper sein kann.

Grundsätzlich kann der Keilkörper mit einer ausreichenden Eigenstabilität versehen sein, so dass dieser in der Lage ist, die Fixierzungen radial nach außen in Richtung des Aufnahmebereichs, insbesondere in Richtung der Innenwand des Aufnahmekanals, zu beaufschlagen, an diesem anzulegen und mit dieser zu verkeilen.

Eine besonders vorteilhafte Ausbildung des Keilkörpers ist jedoch dann möglich, wenn der Keilkörper auf einer den Fixierzungen gegenüberliegenden Seite an dem Gehäuse, beispielsweise an einem Abschlussdeckel des Gehäuses, abgestützt und geführt ist, so dass der Keilkörper lediglich eine begrenzte Eigenstabilität aufweisen muss, um die Fixierzungen in radialer Richtung zu beaufschlagen.

Um den Keilkörper sicher zu fixieren ist vorzugsweise vorgesehen, dass der Keilkörper durch Rastelemente in seiner die Fixierzungen beaufschlagenden Stellung fixiert ist.

Dabei können die Rastelemente entweder zwischen dem Keilkörper und den Fixierzungen wirksam sein oder zwischen dem Keilkörper und dem Abschlussdeckel, sofern ein solcher Abschlussdeckel vorhanden und wirksam ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines Kraftfahrzeugs mit einer Trägereinheit umfassend ein beispielsweise als Kugelhals ausgebildetes Trägerelement;
- Fig. 2: eine perspektivische Darstellung der erfindungsgemäßen Trägereinheit gemäß Fig. 1;
- Fig. 3: einen Blick auf ein Trägerelement der Trägereinheit in Richtung des Pfeils A in Fig. 2;
- Fig. 4: einen Schnitt längs Linie 4-4 in Fig. 9 durch ein erstes Ausführungsbeispiel einer erfindungsgemäßen Einbaueinheit montiert in einer Aufnahme des Trägerelements gemäß Fig. 3;
- Fig. 5: einen Schnitt längs Linie 5-5 in Fig. 6 durch das erste Ausführungsbeispiel der erfindungsgemäßen Einbaueinheit;
- Fig. 6: einen ausschnittsweisen Schnitt längs Linie 6-6 in Fig. 3 durch das erste Ausführungsbeispiel der erfindungsgemäßen Einbaueinheit;
- Fig. 7: eine perspektivische Explosionsdarstellung des ersten Ausführungsbeispiels der erfindungsgemäßen Einbaueinheit;
- Fig. 8: eine perspektivische Darstellung des ersten Ausführungsbeispiels der erfindungsgemäßen Einbaueinheit im zusammengebauten Zustand;
- Fig. 9: eine Seitenansicht des Trägerelements mit Blick auf das Fixierelement beim ersten Ausführungsbeispiel der erfindungsgemäßen Einbaueinheit;
- Fig. 10: eine perspektivische Darstellung des Fixierelements des ersten Ausführungsbeispiels der erfindungsgemäßen Einbaueinheit mit Darstellung einer Wölbung des Auflageelements;
- Fig. 11: einen Schnitt längs Linie 11-11 in Fig. 5;
- Fig. 12: eine Seitenansicht eines Trägerelements mit einem zweiten Ausführungsbeispiel einer erfindungsgemäßen Einbaueinheit ähnlich Fig. 9;
- Fig. 13: einen Schnitt längs Linie 13-13 in Fig. 12;
- Fig. 14: eine perspektivische Explosionsdarstellung des zweiten Ausführungsbeispiels der erfindungsgemäßen Einbaueinheit;
- Fig. 15: eine perspektivische Darstellung des zweiten Ausführungsbeispiels der erfindungsgemäßen Einbaueinheit im zusammengebauten Zustand;
- Fig. 16: einen Schnitt längs Linie 16-16 in Fig. 12;
- Fig. 17: eine perspektivische Darstellung eines Auflagekörpers des zweiten Ausführungsbeispiels der erfindungsgemäßen Einbaueinheit;
- Fig. 18: einen Schnitt längs Linie 18-18 in Fig. 21 durch ein drittes Ausführungsbeispiel einer erfindungsgemäßen Einbaueinheit;
- Fig. 19: eine Draufsicht auf ein Fixierelement des dritten Ausführungsbeispiels der erfindungsgemäßen Einbaueinheit;
- Fig. 20: einen Schnitt längs Linie 20-20 in Fig. 19;
- Fig. 21: eine Seitenansicht ähnlich Fig. 9 auf das Fixierelement des dritten Ausführungsbeispiels der erfindungsgemäßen Einbaueinheit montiert in dem Trägerelement;
- Fig. 22: einen Schnitt längs Linie 22-22 in Fig. 21;
- Fig. 23: eine perspektivische Explosionsdarstellung eines vierten Ausführungsbeispiels einer erfindungsgemäßen Einbaueinheit;
- Fig. 24: eine perspektivische Ansicht des vierten Ausführungsbeispiels der erfindungsgemäßen Einbaueinheit im zusammengebauten Zustand;
- Fig. 25: einen Schnitt längs Linie 25-25 in Fig. 27;
- Fig. 26: einen Schnitt längs Linie 26-26 in Fig. 27;
- Fig. 27: eine seitliche Draufsicht auf das vierte Ausführungsbeispiel der erfindungsgemäßen Einbaueinheit ähnlich Fig. 9;
- Fig. 28: einen Schnitt längs Linie 28-28 in Fig. 29 durch ein fünftes Ausführungsbeispiel einer erfindungsgemäßen Einbaueinheit;
- Fig. 29: einen Schnitt längs Linie 29-29 in Fig. 28 durch das Trägerelement mit eingebautem fünften Ausführungsbeispiel der erfindungsgemäßen Einbaueinheit;
- Fig. 30: eine perspektivische Darstellung des fünften Ausführungsbeispiels der erfindungsgemäßen Einbaueinheit;
- Fig. 31: eine Seitenansicht ähnlich Fig. 9 auf ein sechstes Ausführungsbeispiel einer erfindungsgemäßen Einbaueinheit;
- Fig. 32: eine Seitenansicht des sechsten Ausführungsbeispiels der erfindungsgemäßen Einbaueinheit;
- Fig. 33: eine Draufsicht auf das sechste Ausführungsbeispiel der erfindungsgemäßen Einbaueinheit in Richtung des Pfeils B in Fig. 32;
- Fig. 34: einen Schnitt ähnlich Fig. 16 durch ein siebtes Ausführungsbeispiel einer erfindungsgemäßen Einbaueinheit;
- Fig. 35: eine perspektivische Explosionsdarstellung des siebten Ausführungsbeispiels der erfindungsgemäßen Einbaueinheit;
- Fig. 36: eine perspektivische Darstellung des siebten Ausführungsbeispiels der erfindungsgemäßen Einbaueinheit im zusammengebauten Zustand und
- Fig. 37: eine vergrößerte Darstellung des Bereichs C in Fig. 34.

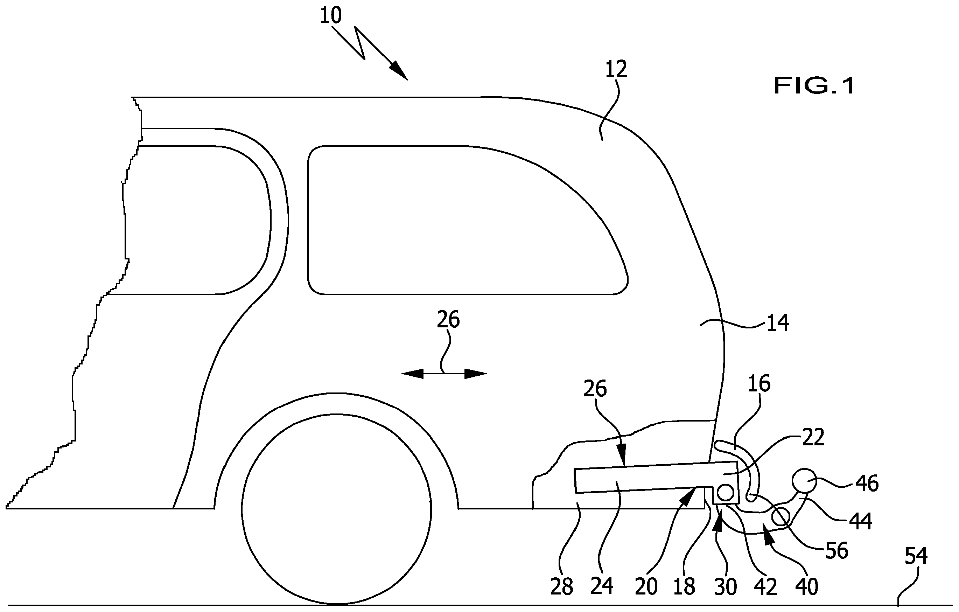

Ein in Fig. 1 dargestelltes und als Ganzes mit 10 bezeichnetes Kraftfahrzeug umfasst eine Karosserie 12, welche an einem Heckbereich 14 eine Stoßfängereinheit 16 trägt.

An einer von der Stoßfängereinheit 16 überdeckten Rückseite 18 des Heckbereichs 14 ist ein Querträger 22 einer als Ganzes mit 20 bezeichneten Trägereinheit vorgesehen, welcher durch Seitenträger 24 an dem Heckbereich 14 der Karosserie 12 fixiert ist, beispielsweise dadurch fixiert ist, dass sich die Seitenträger 24 parallel zu einer Längsrichtung 26 der Karosserie 12 erstrecken und in Seitenbereichen 28 des Heckbereichs 14 an diesem fixiert sind.

Dabei ist der Querträger 22 zwischen der Rückseite 18 des Heckbereichs 14 und der Stoßfängereinheit 16 angeordnet und durch die Stoßfängereinheit 16 überdeckt.

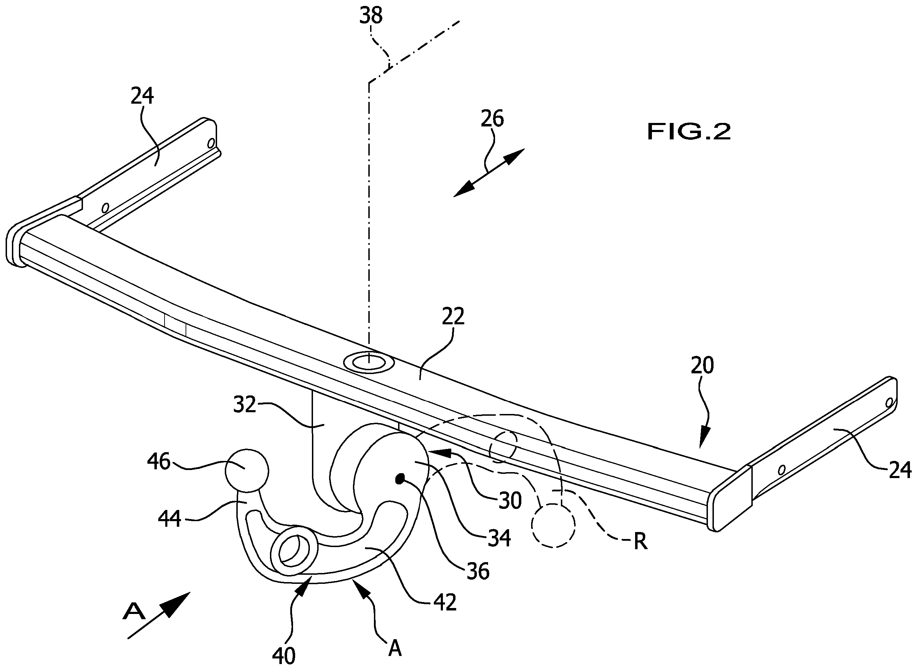

Die Trägereinheit 20 ist ferner mit einer als Ganzes mit 30 bezeichneten Lagereinheit versehen, deren Lagerbasis 32 mit dem Querträger 22 verbunden ist, wie in Fig. 2 dargestellt.

Die Lagereinheit 30 umfasst ferner ein als Ganzes mit 34 bezeichnetes Lagerelement, welches mit einem ersten Ende 42 eines als Ganzes mit 40 bezeichneten und ebenfalls von der Trägereinheit 20 umfassten, insbesondere als Kugelhals ausgebildeten Trägerelements verbunden ist, das sich von dem ersten Ende 42 bis zu einem zweiten Ende 44 erstreckt und an seinem zweiten Ende 44 ein als Ganzes mit 46 bezeichnetes Kupplungselement trägt, das somit von der Trägereinheit 20 getragen ist und beispielsweise als Kupplungskugel ausgebildet ist.

Das Lagerelement 34 kann ein mit der Lagerbasis 32 fest verbundenes oder ein abnehmbar an der Lagerbasis 32 montierbares Lagerelement sein.

Alternativ kann bei der in Fig. 2 dargestellten Lösung das Lagerelement 34 jedoch ein Schwenklagerelement sein, welches relativ zur Lagerbasis 32 um eine mit 36 bezeichnete Schwenkachse verschwenkbar ist, so dass das Kupplungselement 40 von der in Fig. 2 mit durchgezogenen Linien dargestellten Arbeitsstellung A in eine mit gestrichelten Linien dargestellte Ruhestellung R verschwenkbar ist, in welcher sich Trägerelement 40 ausgehend von der Lagerbasis 32 quer zur Längsrichtung 26 der Kraftfahrzeugkarosserie 12 und damit insbesondere längs des Querträgers 22 erstreckt.

Damit verläuft das Trägerelement 40 in der gestrichelt dargestellten Ruhestellung R quer zu einer vertikalen Längsmittelebene 38 der Kraftfahrzeugkarosserie 12 und auch der Trägereinheit 20, wobei die vertikale Längsmittelebene 38 damit auch parallel zur Längsrichtung 26 verläuft.

Ferner verläuft auch die Schwenkachse 36 vorzugsweise quer zur vertikalen Längsmittelebene 38, jedoch schräg zu dieser, insbesondere relativ zur vertikalen Längsmittelebene um einen Winkel von weniger als 90° geneigt, wobei der Winkel beispielsweise weniger als 70° oder insbesondere mehr als 20° beträgt.

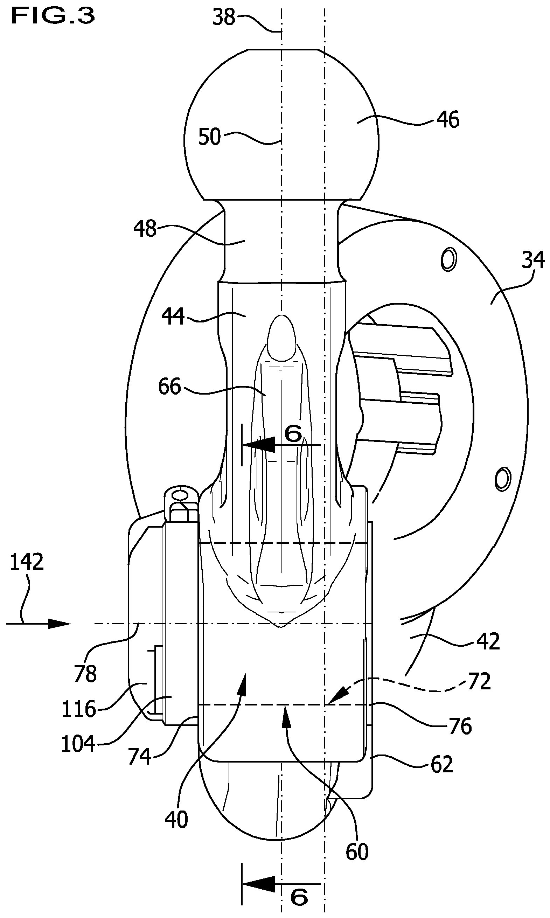

Ein Ausführungsbeispiel eines derartigen Trägerelements 40, insbesondere eines Kugelhalses, ist in Fig. 3 vergrößert dargestellt, wobei das Trägerelement 40 insbesondere mit dem Lagerelement 34 fest verbunden, vorzugsweise an diesem angeformt, ist und das Lagerelement 34 in diesem Fall als Schwenklagerelement zur schwenkbaren Lagerung an der Lagerbasis 32 ausgebildet ist.

Bei dem dargestellten Ausführungsbeispiel des Trägerelements 40 trägt dieses insbesondere an seinem zweiten Ende 44 einen Kugelansatz 48, der eine zylindrisch zu einer Kugelmittelachse verlaufende Mantelfläche aufweist, die in einem radialen Abstand um eine Kugelmittelachse 50 verläuft, der kleiner ist als ein Radius der Kupplungskugel 46.

Bei dem dargestellten Ausführungsbeispiel des Trägerelements 40 weist dieses, wie in Fig. 3 dargestellt, einen einstückig in das Trägerelement 40 integrierten und vorzugsweise in Form eines Ringkörpers 62 ausgebildeten Aufnahmebereich 60 auf, der zwischen einem ersten Abschnitt 64 liegt, welcher sich von dem ersten Ende 42 des Trägerelements 40 bis zum Ringkörper 62 erstreckt, und einem zweiten Abschnitt 66 liegt, welcher sich von dem Ringkörper 62 bis zu dem zweiten Ende 44 des Trägerelements 40 erstreckt.

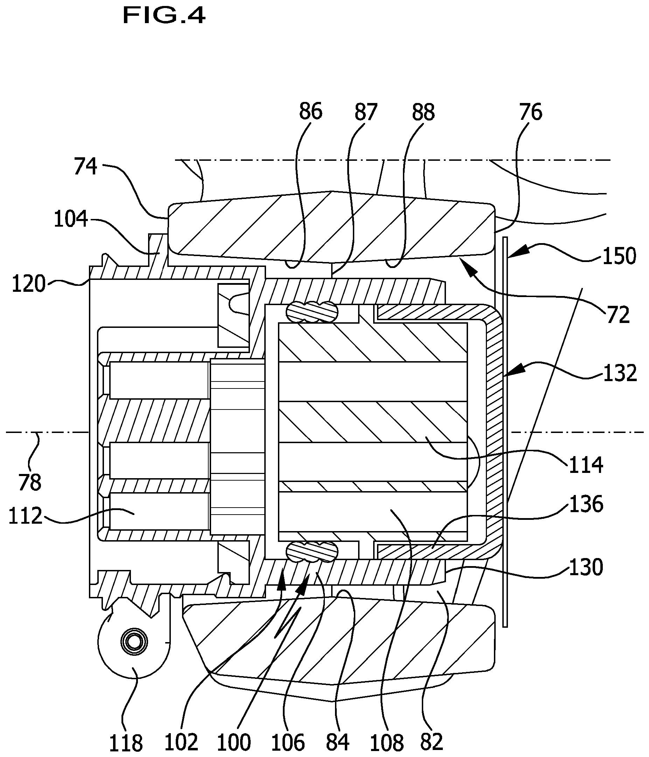

Der Ringkörper 62 umschließt eine als Ganzes mit 72 bezeichnete Aufnahme, welche sich beispielsweise in Form eines Durchbruchs von einer ersten Außenseite 74 des Ringkörpers 62 bis zu einer zweiten Außenseite 76 des Aufnahmebereichs 60 erstreckt und beispielsweise eine Mittelachse 78 bildet, die quer zur vertikalen Längsmittelebene 38 verläuft, und beispielsweise gegenüber einer Senkrechten zur vertikalen Längsmittelebene 38 um einen spitzen Winkel, beispielsweise im Bereich von 5° bis 30° geneigt sein kann (Fig. 3 und Fig. 4).

Die Aufnahme 72 wird insbesondere gebildet durch einen Aufnahmekanal 82 mit einer Innenwand 84, die im Anschluss an die erste Außenseite 74 des Aufnahmebereichs 60 einen im Wesentlichen konisch zur Mittelachse 78 verlaufenden und um die Mittelachse 78 umlaufenden Wandbereich 86 aufweist, der sich von der Außenseite 74 ausgehend bis zu einer Engstelle 87 verengt, sowie einen von der Engstelle 87 ausgehenden und sich bis zur zweiten Außenseite 76 konisch erweiternden Wandbereich 88 aufweist, der somit beim Übergang zur zweiten Außenseite 76 des Aufnahmebereichs 60 in größerem radialen Abstand von der Mittelachse 78 verläuft als nahe der Engstelle 87.

In der Aufnahme 72 ist eine als Ganzes mit 100 bezeichnete Einbaueinheit, beispielsweise ausgebildet als Steckdose, aufgenommen, welche mit einem Gehäuse 102 versehen ist, das einen ersten Gehäuseabschnitt 104 aufweist, welcher an der ersten Außenseite 74 anliegt und insbesondere von dieser abgestützt ist.

Von dem ersten Gehäuseabschnitt 104 ausgehend erstreckt sich ein zweiter Gehäuseabschnitt 106 in den Aufnahmekanal 82 hinein in Richtung der zweiten Außenseite 76.

Vorzugsweise ist dabei der zweite Gehäuseabschnitt 106 einstückig an den ersten Gehäuseabschnitt 104 angeformt, so dass diese einen Gehäuseinnenraum 108 umschließen, in welchem beispielsweise ein Steckkontaktelement 112 und ein mit diesem kombiniertes Leitungsanschlusselement 114 und/oder auch eine elektrische Schaltung, gegebenenfalls noch mit Sensoren, angeordnet sind.

Eine Zugänglichkeit zum beispielsweise im Gehäuseinnenraum 108 angeordneten Steckkontaktelementen 112 wird beispielsweise durch einen den ersten Gehäuseabschnitt 104 abschließenden Deckel 116 ermöglicht, welcher mittels eines Scharniers 118 relativ zum ersten Gehäuseabschnitt 104 verschwenkbar ist und auf einer dem zweiten Gehäuseabschnitt 106 gegenüberliegenden Seite am ersten Gehäuseabschnitt 104 vor der ersten Außenseite 74 angeordnet ist, so dass durch Verschwenken des Deckels 116 eine Öffnung 120 des Gehäuses 102 zugänglich ist.

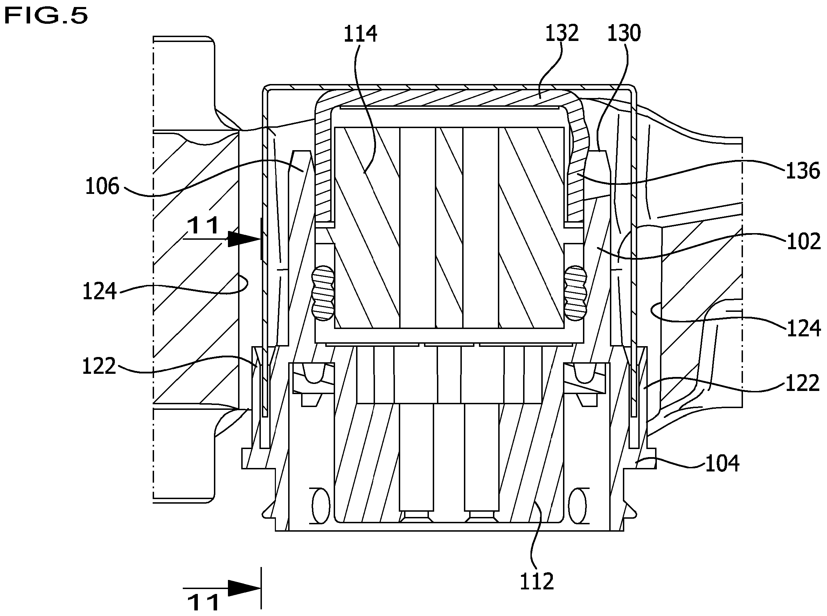

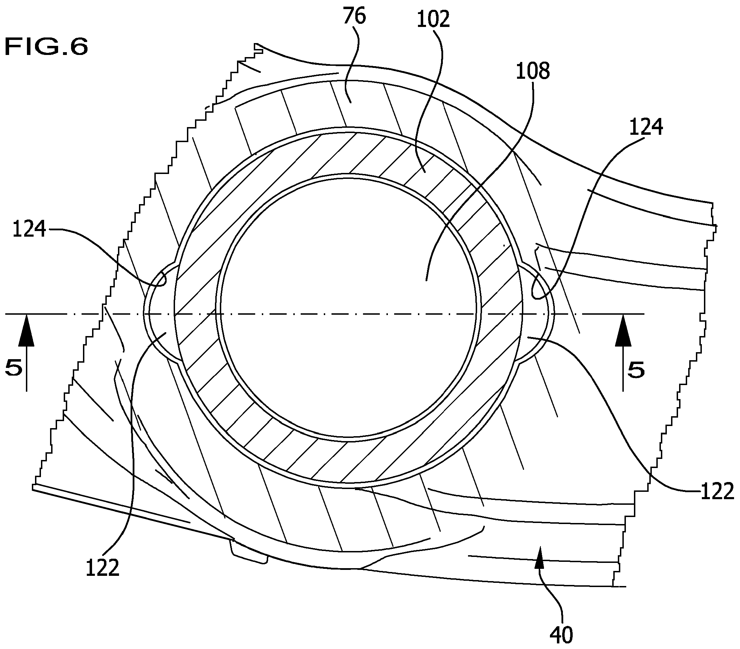

Beispielsweise ist der zweite Gehäuseabschnitt 106 - wie in Fig. 5 und 6 dargestellt - so ausgebildet, dass der zweite Gehäuseabschnitt 106 im Anschluss an den ersten Gehäuseabschnitt 104 mindestens einen Vorsprung 122, vorzugsweise auf gegenüberliegenden Seiten jeweils einen Vorsprung 122, aufweist, wobei jeder der Vorsprünge 122 in eine sich radial zur Mittelachse 78 erstreckende Ausnehmung 124 in dem Wandbereich 86 hinein erstreckt und wobei die Ausnehmung 124 derart an die Form des jeweiligen Vorsprungs 122 angepasst ist, dass durch das Zusammenwirken jeweiligen Vorsprungs 122 mit der entsprechenden Ausnehmung 124 eine drehfeste Fixierung des Gehäuses 102 der Einbaueinheit in der Aufnahme 72 erfolgt.

Dadurch ergibt sich durch das Zusammenwirken des jeweiligen Vorsprungs 122 mit der Entsprechenden Ausnehmung 124 eine eindeutige Ausrichtung des Gehäuses 102 der Einbaueinheit 100 und somit auch eine eindeutige Ausrichtung des Deckels 116 und beispielsweise des Steckkontaktelements 112.

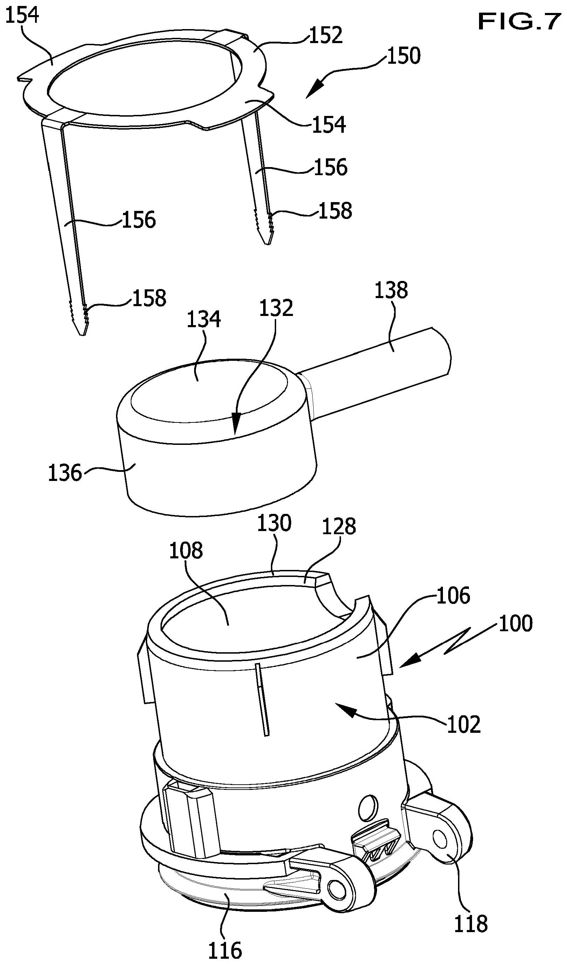

Wie außerdem in Fig. 7 dargestellt, ist das Gehäuse 102 auf seiner dem ersten Gehäuseabschnitt 104 abgewandten Zugangsseite 130 mit einer Zugangsöffnung 128 versehen, welche durch einen als Ganzes mit 132 bezeichneten Abschlussdeckel verschließbar ist, wobei der Abschlussdeckel 132 eine Abschlusswand 134 und einen ausgehend von der Abschlusswand 134 sich erstreckenden zylindrischen Ansatz 136 aufweist, welcher durch die Zugangsöffnung 128 in den Gehäuseinnenraum 108 einführbar ist, um einen dichten Abschluss zwischen dem zweiten Gehäuseabschnitt 106 und dem Deckel 132 zu erreichen.

Ferner ist der Abschlussdeckel 132 noch mit einer hülsenartig ausgebildeten Kabelzuführung 138 versehen, durch welche ein Zuleitungskabel in den Gehäuseinnenraum 108 bei auf den zweiten Gehäuseabschnitt 106 aufgesetztem Abschlussdeckel 132 eingeführt werden kann.

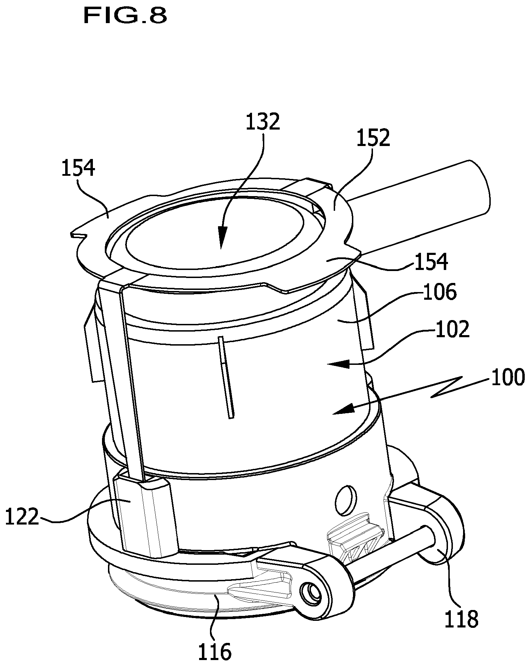

Wie in Fig. 8 dargestellt, schließt der Abschlussdeckel 132 somit den Gehäuseinnenraum 108 auf einer dem Deckel 116 gegenüberliegenden Seite ab wobei, wie in Fig. 5 dargestellt, der zylindrische Ansatz 136 mit Wänden des zweiten Gehäuseabschnitts 106 dicht abschließend verbindbar ist.

Zur Fixierung des Gehäuses 102 in der Aufnahme 72 erfolgt, wie in Fig. 3 angedeutet, ein Einschieben des Gehäuses 102 mit dem zweiten Gehäuseabschnitt 106 in einer Einschieberichtung 142 in die als Ganzes mit 72 bezeichnete Aufnahme vorzugsweise parallel zur Mittelachse 78 so weit, bis das Gehäuse 102 mit dem ersten Gehäuseabschnitt 104 an der ersten Außenseite 74 des Aufnahmebereichs 60 anliegt.

Dies erfolgt bei noch nicht montiertem Abschlussdeckel 132, so dass erst dann, wenn das Gehäuse 102 der Einbaueinheit 100 in die Aufnahme 72 eingeschoben ist, ein Aufsetzen des Abschlussdeckels 132 nach Verbinden der durch die Kabelzuführung 138 eingeführten Zuleitung mit dem Leitungsanschlusselement 114 erfolgt.

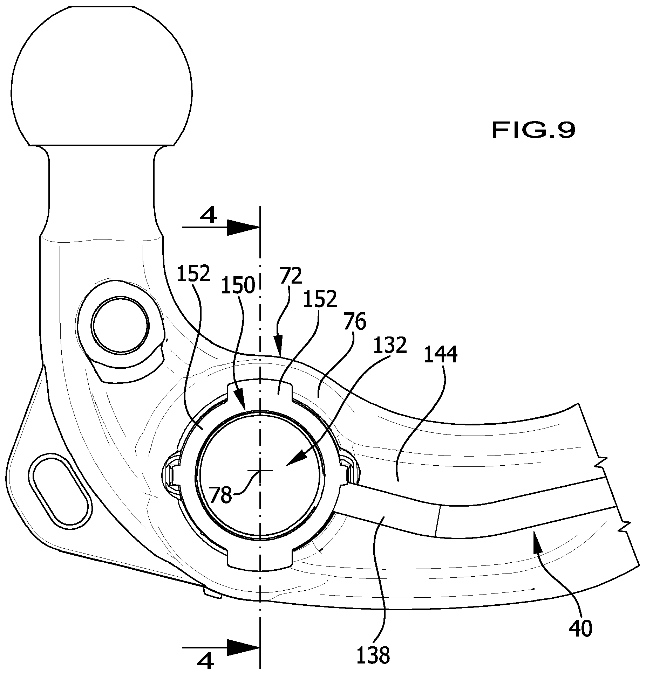

In diesem Fall liegt vorzugsweise die Kabelzuführung 138, wie in Fig. 9 dargestellt, in einer Vertiefung 144 des Trägerelements 40, die relativ zur zweiten Außenseite 76 der Aufnahme 72 zurückgesetzt ist, so dass die Kabelzuführung 138 im Wesentlichen gegen mechanische äußere Einflüsse durch das Trägerelement 40 geschützt ist.

Die Fixierung des Gehäuses 102 erfolgt durch eine in den Figuren 7 bis 10 dargestellte Fixiereinheit, ausgebildet als Fixierelement 150, welches bei dem ersten Ausführungsbeispiel einen Auflagekörper 152 aufweist, welcher beispielsweise seinerseits Auflagevorsprünge 154 umfasst, so dass dieser an der zweiten Außenseite 76 anlegbar ist, um sich an dieser abzustützen.

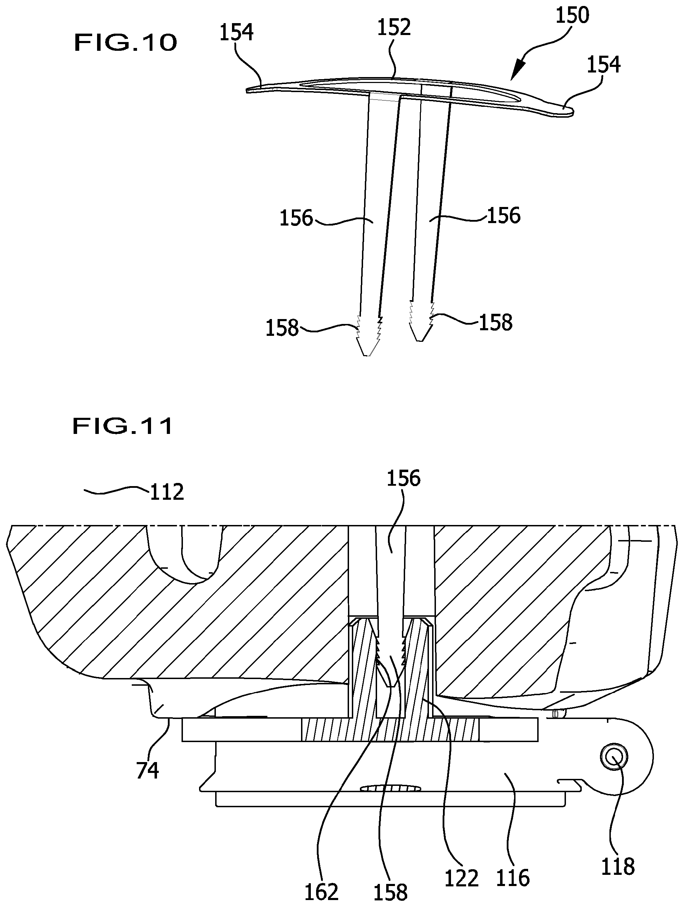

Ferner ist der Auflagekörper 152 mit zwischen den Auflagevorsprüngen 154 angeordneten Halteankern 156 versehen, welche an ihren dem Auflagekörper 152 abgewandten Enden mit Rastelementen 158 versehen sind, die ihrerseits, wie in Fig. 11 dargestellt, in Rastaufnahmen 162 der Vorsprünge 122 einrastbar sind, so dass das Fixierelement 150 im montierten Zustand durch seine Abstützung an der zweiten Außenseite 76 auf das Gehäuse 102 im Bereich der Vorsprünge 122 einwirkt und dadurch das Gehäuse 102 gegen eine Bewegung entgegengesetzt zur Einschieberichtung 142 in der Aufnahme 72 sichert.

Vorzugsweise ist das Fixierelement 150 mit einem zumindest geringfügig elastisch ausgebildeten Auflagekörper 152 versehen, der beispielsweise geringfügig in Richtung auf die Zugangsseite 130 und somit auch in Richtung auf die zweite Außenseite 76 gewölbt ist, so dass die Auflagevorsprünge 154 relativ zum Auflagekörper 152 im Bereich der an diesem angreifenden Halteanker 156 in Richtung der zweiten Außenfläche 76 vorstehend angeordnet sind und somit ein Aufdrücken des Fixierelements 150 in Richtung auf die zweite Außenseite 76 und ein Einschieben der Halteanker 156 mit den Rastelementen 158 in die Rastaufnahmen 162 zu einer die Wölbung reduzierenden Deformation des Auflagekörpers 152 führt, der somit selbst an der zweiten Außenseite 76 anliegt und folglich den ersten Gehäuseabschnitt 104 des Gehäuses 102 kraftbeaufschlagt in Anlage an der ersten Außenseite 74 hält.

Dadurch, dass das Rastelement 158 in der Rastaufnahme 162 in verschiedenen Positionen verrastbar ist, beispielsweise durch eine wie in Fig. 11 dargestellte Rastaufnahme 162, die eine größere Längenausdehnung aufweist als das jeweilige Rastelement 158, besteht die Möglichkeit, bei der Verrastung des Fixierelements 150 mit dem Gehäuse 102 Toleranzen hinsichtlich des Abstandes der Außenseite 74 von der Außenseite 76 auszugleichen.

Dies ermöglicht es, das Kupplungselement 40 und somit auch den Aufnahmebereich 60 als Schmiedeteil auszuführen, was zur Folge hat, dass Maßtoleranzen zwischen den Außenseiten 74 und 76 auftreten, die allerdings in der vorstehend beschriebenen Art und Weise bei der Montage der Einbaueinheit 100 ausgeglichen werden können.

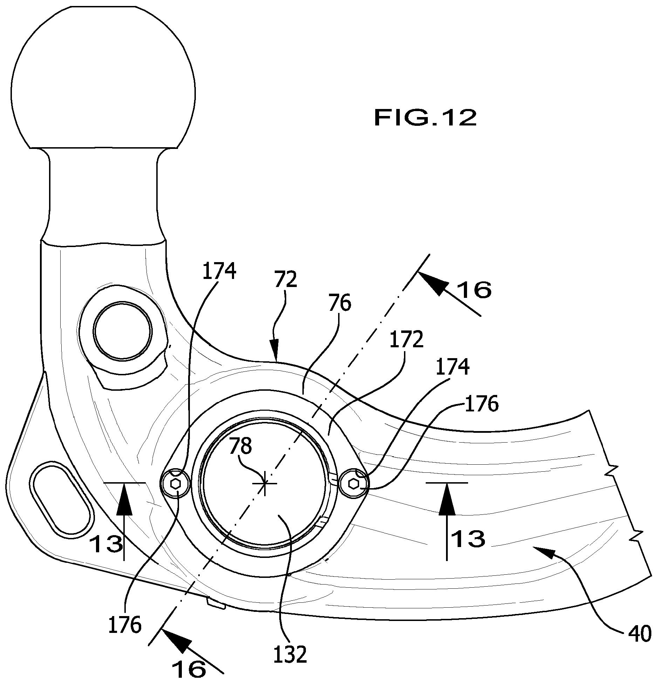

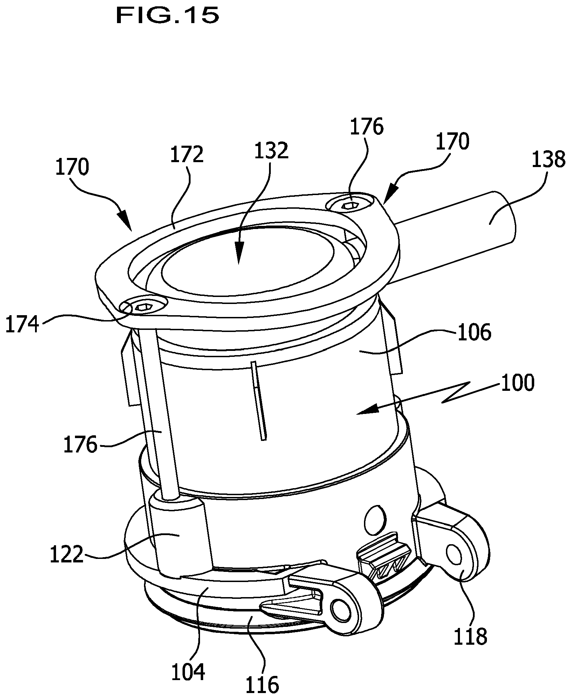

Bei einem zweiten Ausführungsbeispiel, dargestellt in den Fig. 12 bis 17, sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel verwiesen werden kann.

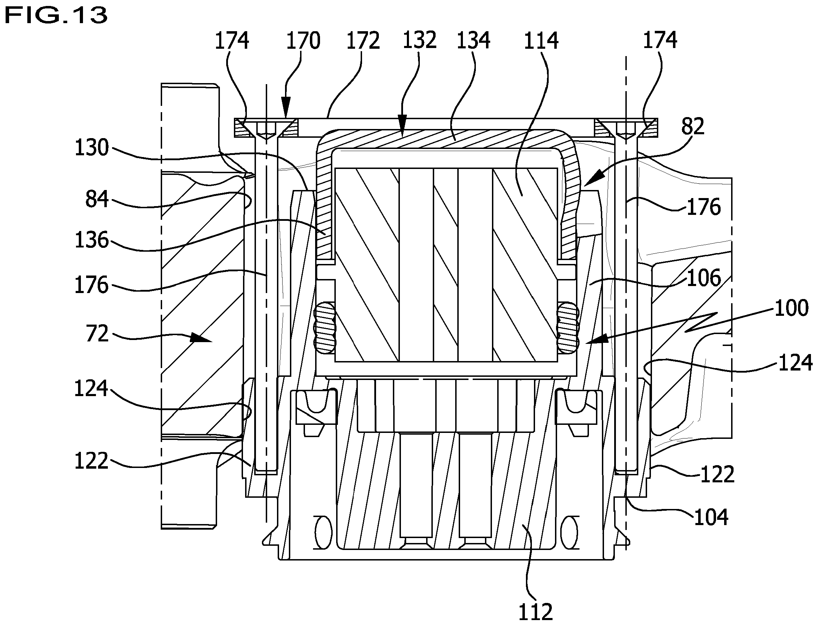

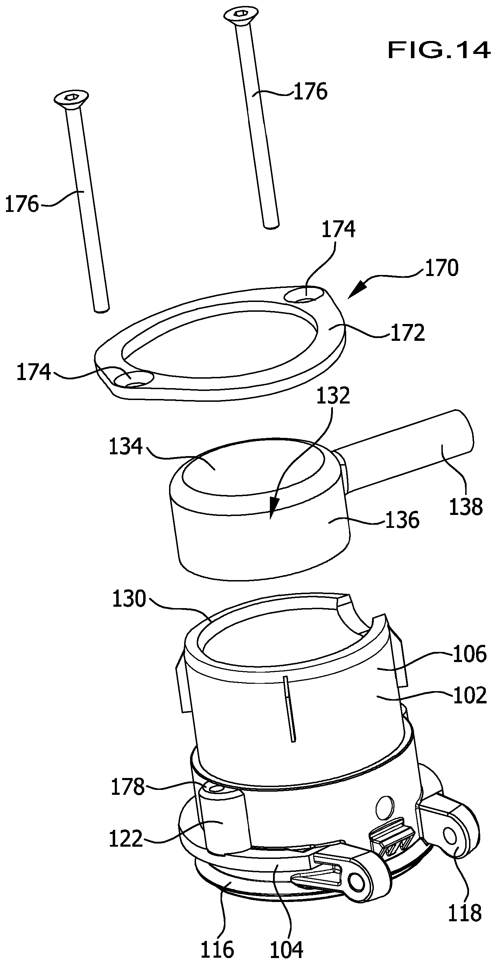

Im Gegensatz zum ersten Ausführungsbeispiel umfasst, wie in Fig. 14 dargestellt, die Fixiereinheit, ausgebildet als Fixierelement 170, einen Auflagekörper 172, der als Ringkörper ausgebildet ist und Durchbrüche 174 aufweist, durch welche Schraubanker 176 hindurchsteckbar sind, wobei die Schraubanker 176 in Schrauböffnungen 178 der Vorsprünge 122 einschraubbar sind, um mittels der Schraubanker 176 den Auflagekörper 172, wie in Fig. 13 dargestellt, gegen die zweite Außenseite 76 des Aufnahmebereichs 60 anzulegen und dadurch den Auflagekörper 172 sowie den ersten Gehäuseabschnitt 104, der an der Außenseite 74 anliegt, gegeneinander zu verspannen.

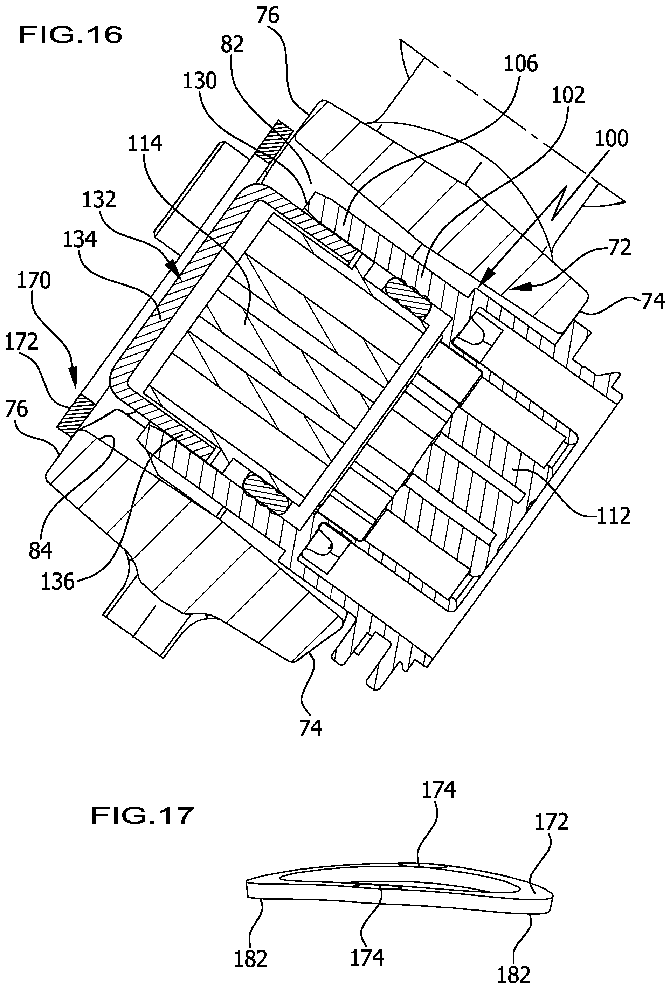

Darüber hinaus ist, wie in Fig. 17 dargestellt, der Auflagekörper 172 ebenfalls derart deformiert, dass Teilbereiche 182 des Auflagekörpers 172, die zwischen den Durchbrüchen 174 liegen, sich weiter in Richtung der Außenseite 76 erstrecken, so dass das Einschrauben der Schraubanker 176 in die Schraubaufnahmen 178 eine Deformation in dem Auflagekörper 172 erzeugt, die zu einer permanenten elastischen Kraftwirkung zwischen dem Auflagekörper 172 und dem ersten Gehäuseabschnitt 104 führt, um das Gehäuse 102 sicher und spielfrei in der Aufnahme 72 zu fixieren.

Durch die in die Schraubenaufnahmen 178 einschraubbaren Schraubanker 176 ist ebenfalls ein Toleranzausgleich möglich.

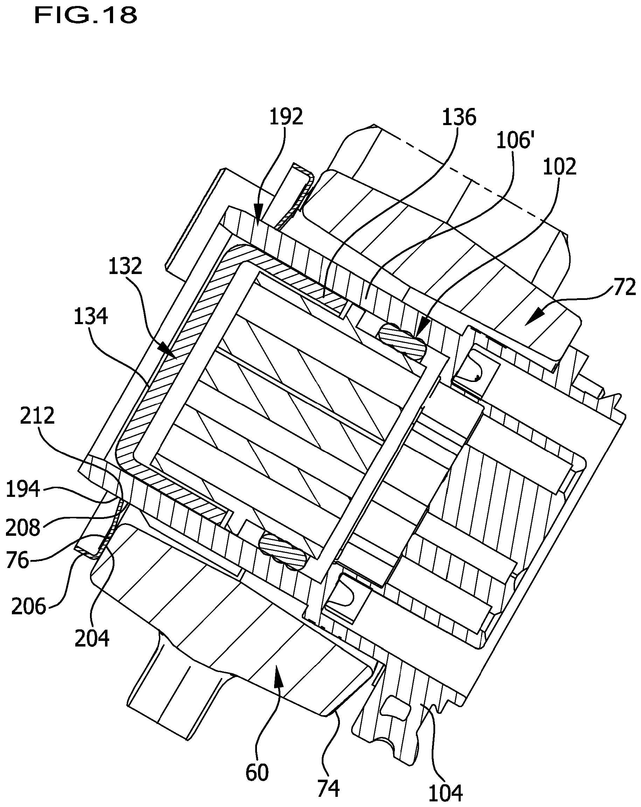

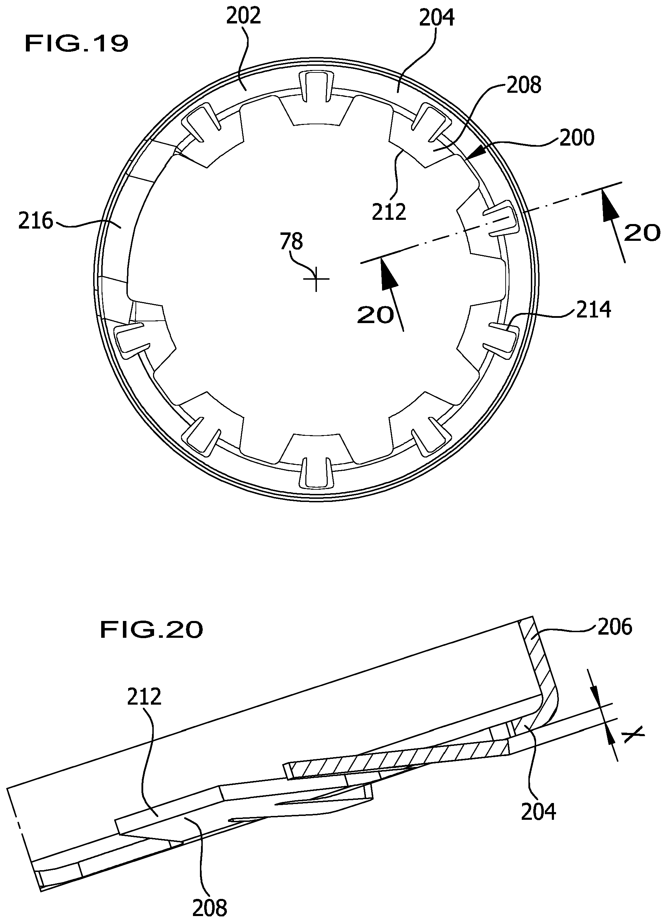

Bei einem dritten Ausführungsbeispiel einer erfindungsgemäßen Einbaueinheit 100, dargestellt in den Fig. 18 bis 22 sind ebenfalls diejenigen Elemente, die mit denen der voranstehenden Ausführungsbeispiele identisch sind, mit denselben Bezugszeichen versehen, so dass vollinhaltlich auf die Ausführungen zu diesen Ausführungsbeispielen Bezug genommen werden kann.

Bei dem dritten Ausführungsbeispiel erstreckt sich allerdings der zweite Gehäuseabschnitt 106' mit einem Fixierabschnitt 192 in Richtung der Mittelachse 78 über die zweite Außenseite 76 hinaus, wobei der Fixierabschnitt 192 eine umfangseitige Haltefläche 194 für eine Fixiereinheit, umfassend ein als Ganzes mit 200 bezeichnetes Fixierelement, aufweist.

Das Fixierelement 200 ist als Ringkörper 202 ausgebildet, wobei der Ringkörper 202 einen quer, vorzugsweise senkrecht zur Mittelachse 78 verlaufenden Flachbereich 204 aufweist, von welchem zur Stabilisierung eine äußere, quer zum Flachbereich 204 verlaufende Aufkantung 206 absteht.

Der Flachbereich 204 liegt vorzugsweise in einer quer, insbesondere senkrecht, zur Mittelachse 78 verlaufenden Ebene und in dieser Ebene liegen auch Fixierzungen 208, welche von dem Flachbereich 204 radial nach innen überstehen und sich in Richtung der Haltefläche 194 des Fixierabschnitts 192 erstrecken, um sich beim Aufschieben des Ringkörpers 202 in der Haltefläche 194 festzukrallen, wobei beim Aufschieben des Ringkörpers 202 der Fixiereinheit 200 auf den Fixierabschnitt 194 eine geringfügige Deformation im Bereich der Fixierzungen 208 erfolgt, die mit ihren Zungenenden 212 an der Haltefläche 194 anliegen und sich vorzugsweise in dem Material des Fixierabschnitts 192 durch Eingreifen festkrallen.

Sofern der Fixierabschnitt 192, wie in üblicher Weise auch das gesamte Gehäuse 102, aus Kunststoff hergestellt ist und die Fixiereinheit 200, insbesondere der Ringkörper 202 als Metallteil ausgebildet ist, erfolgt beispielsweise ein so genanntes Eingraben der Fixierzungen 208 in dem Material des Fixierabschnitts 192 und damit eine Fixierung der Fixierzungen 208 an der Haltefläche 194, so dass dadurch ebenfalls der fest mit dem zweiten Gehäuseabschnitt verbundene erste Gehäuseabschnitt 104 in Anlage an der ersten Außenseite 74 gehalten wird und durch Anlegen der Fixiereinheit 200 an der zweiten Außenseite 76 eine feste und ebenfalls toleranzunempfindliche Fixierung der gesamten Einbaueinheit 100 in der Aufnahme 72 möglich ist.

Vorzugsweise sind die Fixierzungen 208 so ausgebildet, dass an einem Ansatz der Fixierzungen 208 an dem Flachbereich 204 noch eine Freisparung 214 vorgesehen ist, welche zur erhöhten Flexibilität der Fixierzungen 208 in Richtung der Mittelachse 78 und somit einer höheren Elastizität der Fixierzungen 208 relativ zum Ringkörper 202 beiträgt.

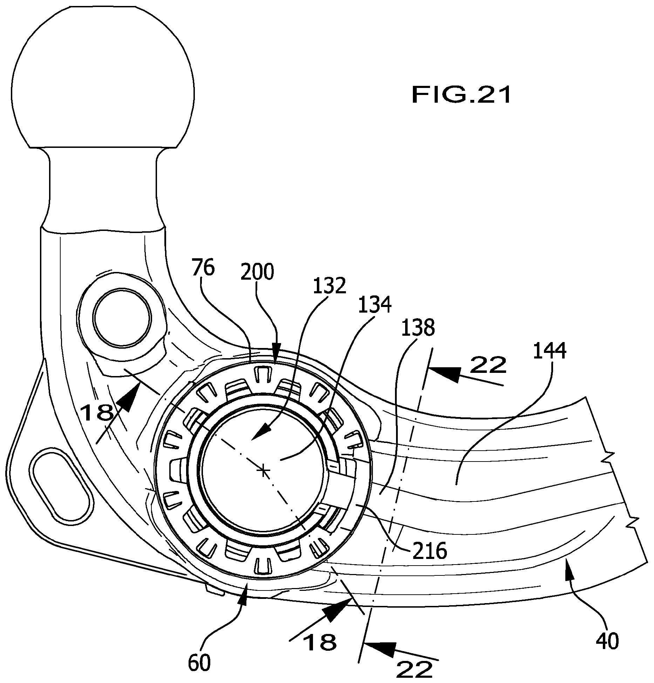

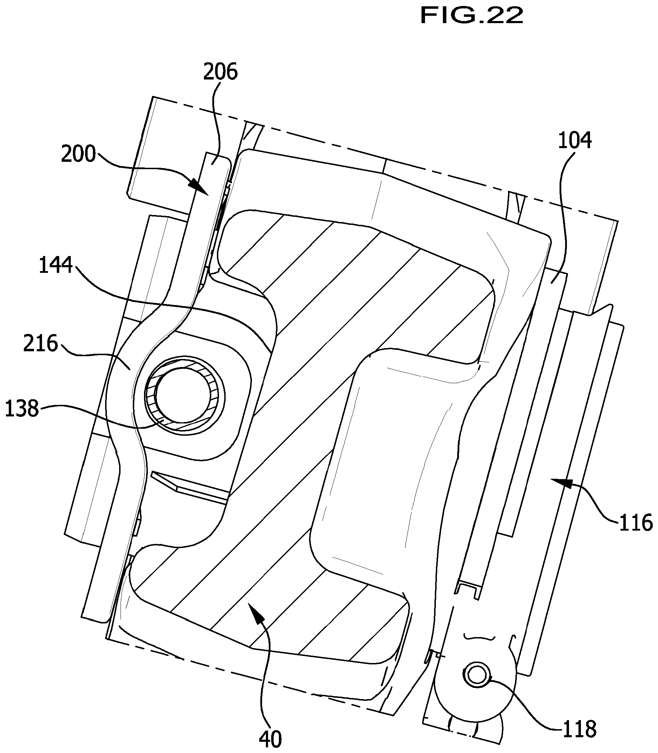

Darüber hinaus ist bei dem dritten Ausführungsbeispiel an die Fixiereinheit 200, insbesondere den Ringkörper 202, noch ein Haltebügel 216 angeformt, welcher im Bereich der Kabelzuführung 138 des Abschlussdeckels 132 noch die Kabelzuführung 138 in Richtung der Vertiefung 144 im Trägerelement 40 beaufschlagt hält um somit gleichzeitig die Kabelzuführung 138 in der Vertiefung 144 zu fixieren (Fig. 21 und 22).

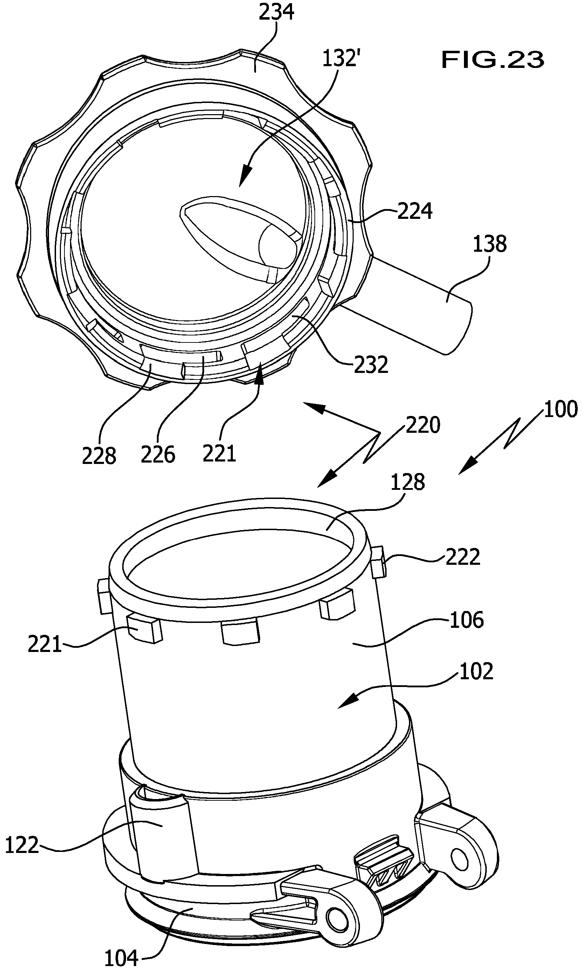

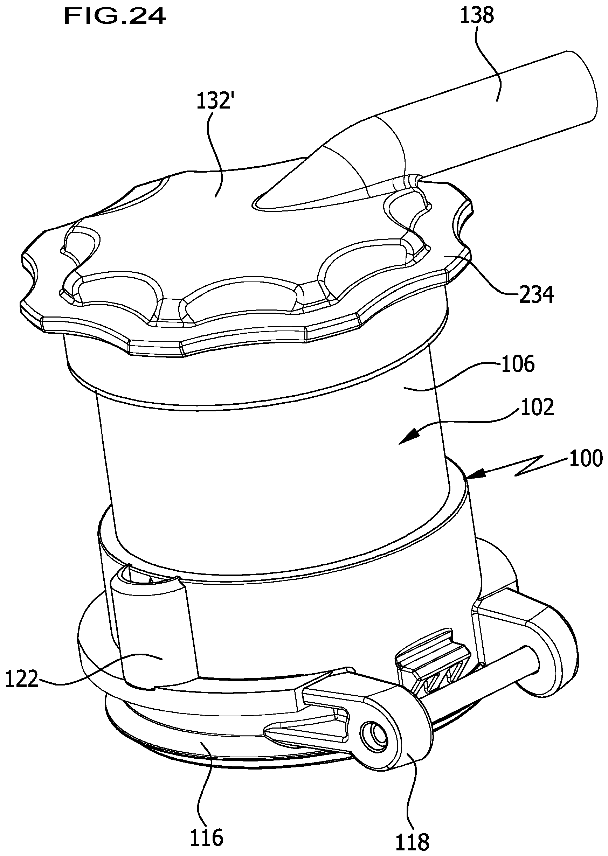

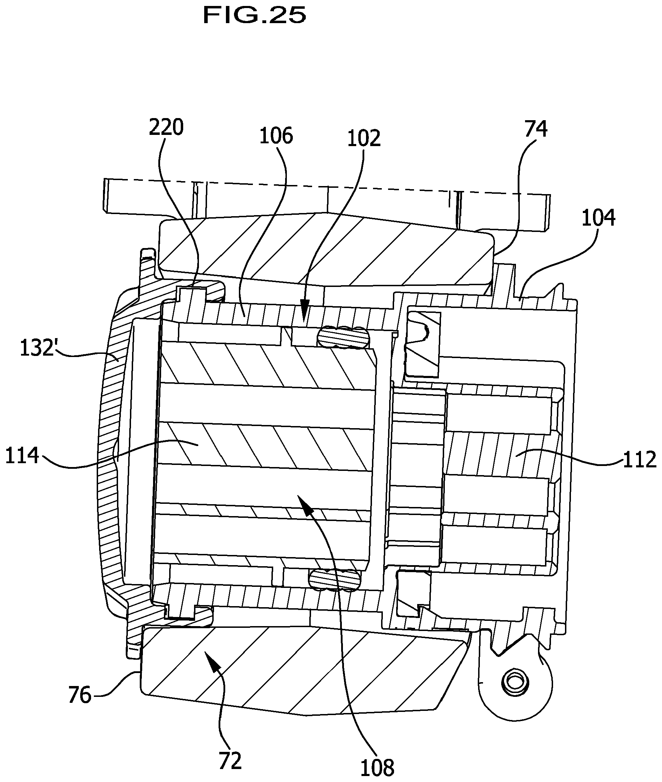

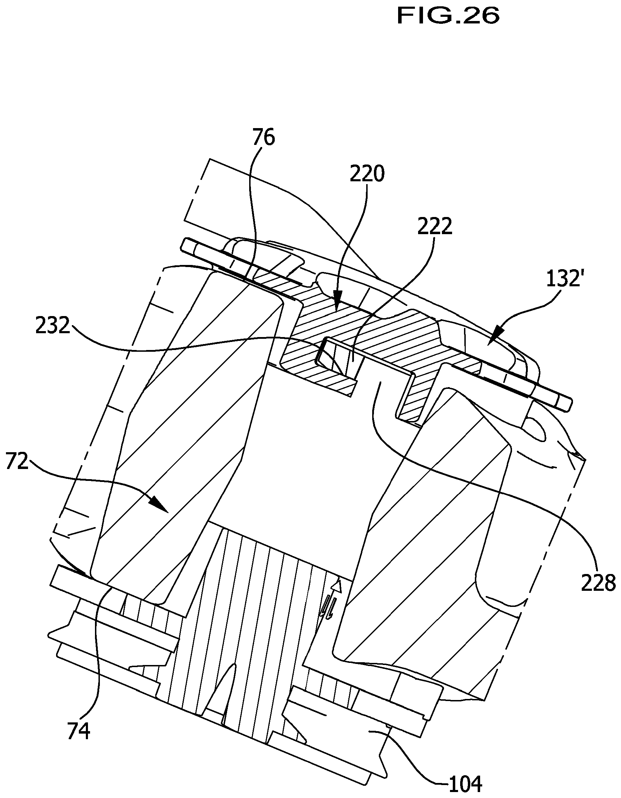

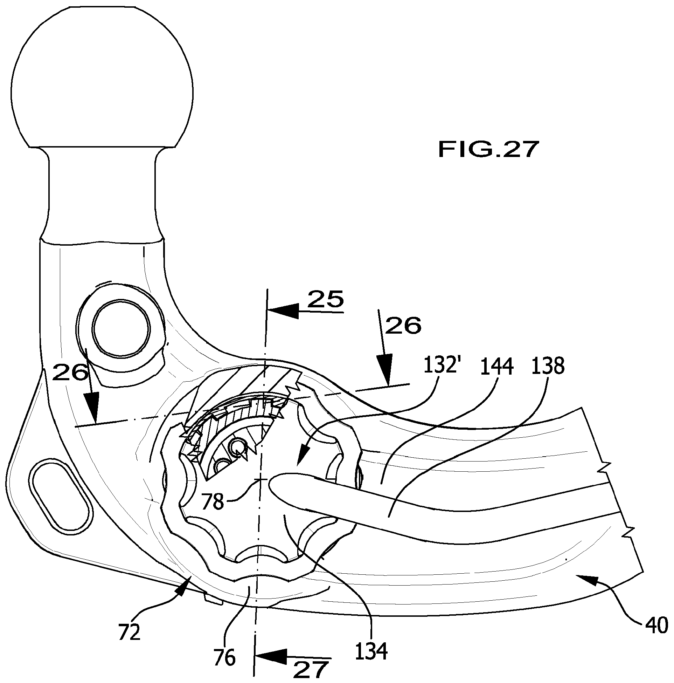

Bei einem vierten Ausführungsbeispiel, dargestellt in den Fig. 23 bis 27 sind diejenigen Elemente, die mit denen der voranstehenden Ausführungsbeispiele identisch sind, mit denselben Bezugszeichen versehen, so dass hinsichtlich derselben vollinhaltlich auf die Ausführungen zu den voranstehenden Ausführungsbeispielen Bezug genommen wird.

Im Gegensatz zu den voranstehenden Ausführungsbeispielen ist, wie in den Fig. 23 bis 27 dargestellt, der Abschlussdeckel 132' mittels einer einen Bajonettverschluss 221 umfassenden Fixiereinheit 220 an dem zweiten Gehäuseabschnitt 106 fixierbar, wobei hierzu um die Zugangsöffnung 128 am Gehäuseabschnitt 106 Verschlusskörper 222 des Bajonettverschlusses 221 angeordnet sind, während in einem zylindrischen Ansatz 224 des Abschlussdeckels 132', der so ausgebildet ist, dass er den zweiten Gehäuseabschnitt 106 auf seiner Außenseite umfasst, Verschlussaufnahmen 226 des Bajonettverschlusses 221 angeordnet sind, die Einführbereiche 228 aufweisen, durch welche beim Aufsetzen des Abschlussdeckels 132' auf den zweiten Gehäuseabschnitt 106 die Verschlusskörper 222 in die Verschlussaufnahmen 226 hinein bewegbar sind, wobei dann durch Drehen des Abschlussdeckels 132' die Verschlusskörper 222 des Bajonettverschlusses in die Bajonettaufnahmen 232 der Verschlussaufnahmen 226 bewegbar sind, in welchen die Verschlusskörper 222 den Abschlussdeckel 132' sicher gegen ein Abheben von dem zweiten Gehäuseabschnitt 106 sichern.

Ferner umfasst die Fixiereinheit 220 einen an dem Abschlussdeckel 132' des vierten Ausführungsbeispiels angeformten Fixierflansch 234, welcher fest mit dem Abschlussdeckel 132' verbunden ist und bei an dem zweiten Gehäuseabschnitt 106 fixiertem Abschlussdeckel 132' auf der zweiten Außenseite 76 des Aufnahmebereichs 60 anliegt und somit die Einbaueinheit 100 unter Anlage des ersten Gehäuseabschnitts 104 an der Außenfläche 74 in der Aufnahme 72 fixiert.

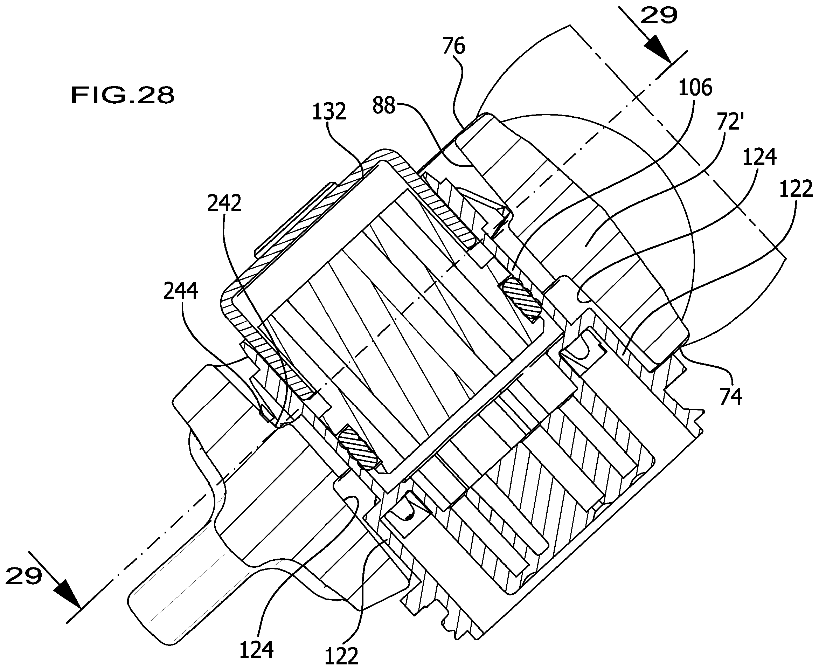

Bei einem fünften Ausführungsbeispiel, dargestellt in Fig. 28 bis 30 ist der Wandbereich 88 der Aufnahme 72' mit einer Stufe 242 versehen, welche eine der zweiten Außenseite 76 zugewandte Stufenfläche 244 aufweist.

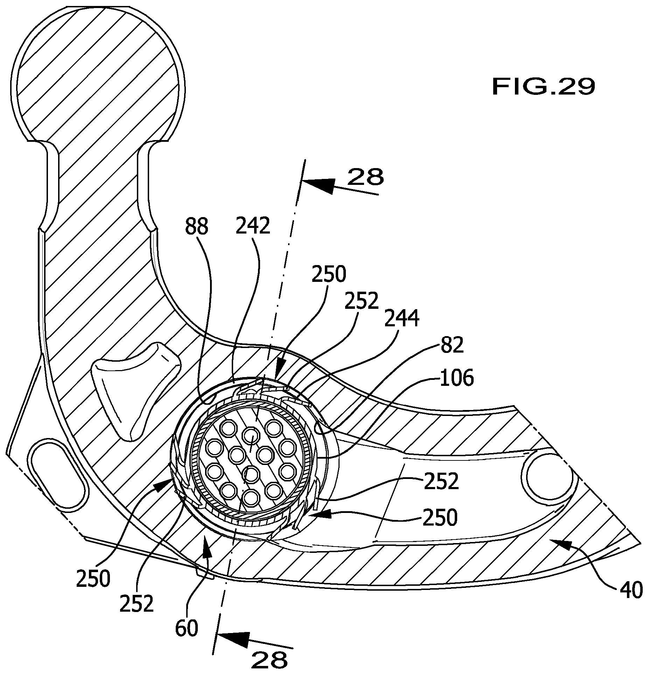

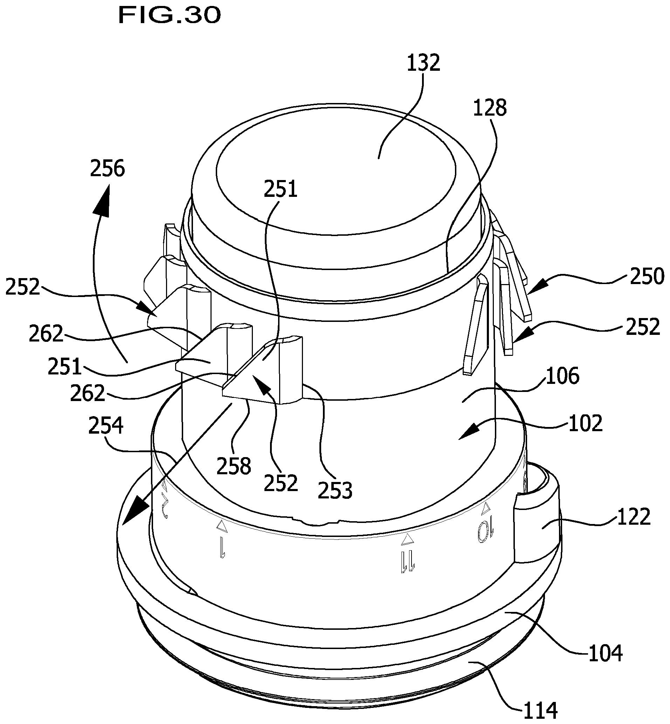

Zur Fixierung des zweiten Gehäuseabschnitts 106 in der Aufnahme 72' ist der zweite Gehäuseabschnitt 106, wie in Fig. 29 und 30 dargestellt, mit einer Fixiereinheit 250, umfassend mindestens zwei, vorzugsweise mehrere Fixiervorsprünge 252, versehen, wobei sich jeder Fixiervorsprung 252 einerseits in radialer Richtung 254 zum zweiten Gehäuseabschnitt 106 erstreckt und andererseits in einer Umlaufrichtung 256 um den zweiten Gehäuseabschnitt erstreckt.

Jeder dieser Fixiervorsprünge 252 ist insbesondere als eine Art sich parallel zur Mittelachse 78 oder Einschieberichtung 142 erstreckenden Lamelle 251 ausgebildet und dabei relativ zum zweiten Gehäuseabschnitt 106 elastisch bewegbar, wobei jeder der Fixiervorsprünge 252 sich ohne äußere Krafteinwirkung sich selbständig in radialer Richtung 254 vom zweiten Gehäuseabschnitt 106 weg erstreckt. Hierzu ist die Lamelle 251 mit einer sich ungefähr parallel zur Mittelachse 78 oder Einschieberichtung 142 erstreckenden Längsseite 253 mit dem zweiten Gehäuseabschnitt 106 verbunden.

Somit ist der jeweilige Fixiervorsprung 252 in der Lage, sich ohne äußere Krafteinwirkung mit einer sich quer zur Längsseite 253 erstreckenden Abstützkante 258 auf der Stufenfläche 244 abzustützen und damit das Gehäuse 102 gegen eine Bewegung aus dem Aufnahmekanal 82 heraus in einer Richtung entgegengesetzt zur Einschieberichtung 142 zu sichern.

Darüber hinaus umfasst jeder dieser Fixiervorsprünge 252 noch eine schräg zur Einschieberichtung 142 und quer zur Längsseite 253 verlaufende Einschwenkkante 262 welche beim Bewegen des Gehäuses 102 in der Einschieberichtung 142 mit der Innenwand 84 des Aufnahmekanals 82 in Berührung kommt und dadurch den jeweiligen Fixiervorsprung 252 derart deformiert, dass dieser sich von seiner ursprünglichen radialen Erstreckung relativ zum zweiten Gehäuseabschnitt 106 in der radialen Richtung 254 so weit auf den zweiten Gehäuseabschnitt 106 zu bewegt, dass das Gehäuse 102 in den Aufnahmekanal 82 unter Entlanggleiten der Fixiervorsprünge 252 an der Innenwand 84 einschiebbar ist und zwar so weit, bis die Abstützkante 258 die Stufenfläche 244 erreicht und sich der jeweilige Fixiervorsprung252 somit wieder radial nach außen ausdehnen und in seine ursprüngliche Form zurückkehren kann, in welcher dann vorzugsweise jeder der Fixiervorsprünge 252 mit der Abstützkante 258 zur Sicherung des Gehäuses 102 in der Aufnahme 72' beiträgt.

Wie insbesondere in Fig. 29 und 30 erkennbar, sind beispielsweise an dem zweiten Gehäuseabschnitt 106 drei Sätze mit derartigen Fixiervorsprünge 252 vorgesehen, wobei jeder Satz beispielsweise drei Fixiervorsprünge 252 umfasst und somit eine Anordnung der drei Sätze von Fixiervorsprüngen 252 in gleichen Winkelabständen zu einer symmetrischen Abstützung des zweiten Gehäuseabschnitts 106 an der Stufenfläche 244 der Aufnahme 72' führt.

Bei dem fünften Ausführungseispiel ist dabei der Abschlussdeckel 132 in gleicher Weise wie bei den voranstehenden Ausführungsbeispielen zum Verschluss der Zugangsöffnung 128 in den zweiten Gehäuseabschnitt 106 eingesetzt.

Darüber hinaus sind auch bei dem fünften Ausführungsbeispiel zur drehfesten Festlegung des zweiten Gehäuseabschnitts 106 in der Aufnahme 72' zwei Vorsprünge 122 an dem zweiten Gehäuseabschnitt 106 angeformt, die in Ausnehmungen 124 in der Aufnahme 72' eingreifen, in gleicher Weise wie dies im Zusammenhang mit den voranstehenden Ausführungsbeispielen beschrieben wurde.

Im Übrigen sind diejenigen Elemente, die mit den voranstehenden Ausführungsbeispielen identisch sind, sowohl beim fünften als auch beim nachfolgenden sechsten Ausführungsbeispiel in gleicher Weise ausgebildet, wie bei den voranstehenden Ausführungsbeispielen, so dass vollinhaltlich auf die Ausführungen zu den voranstehenden Ausführungsbeispielen Bezug genommen wird.

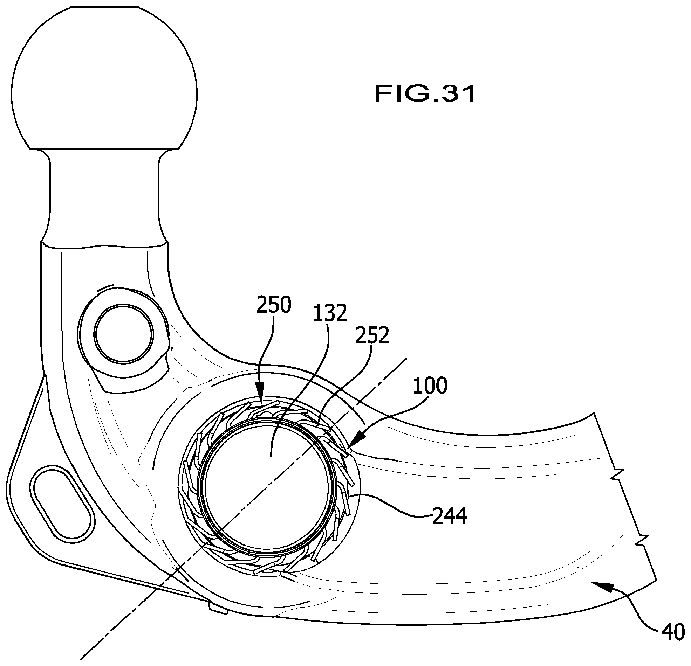

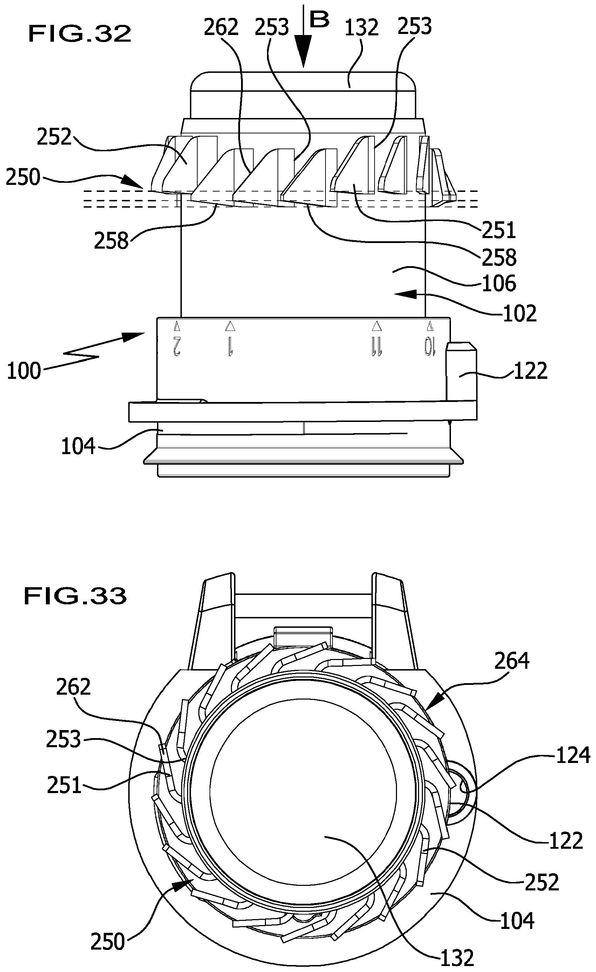

Bei einem sechsten Ausführungsbeispiel, dargestellt in den Fig. 31 bis 33 sind in Abwandlung des fünften Ausführungsbeispiels an dem zweiten Gehäuseabschnitt 106 als Fixiereinheit 250 umlaufend Fixiervorsprünge 252 angeformt, so dass ein kompletter Kranz 270 von Fixiervorsprüngen 252 vorliegt, die in gleicher Weise wie beim fünften Ausführungsbeispiel ausgebildet sind.

Im Gegensatz zum fünften Ausführungsbeispiel ist allerdings beim sechsten Ausführungsbeispiel vorgesehen, dass die Abstützkanten 258 der Fixiervorsprünge 252 in unterschiedlichen Abständen von dem ersten Gehäuseabschnitt 104 angeordnet sind, wobei beispielsweise einer oder mehrere der Fixiervorsprünge 252 mit ihrer Abstützkante 258 in einem definierten Abstand von dem ersten Gehäuseabschnitt 104 angeordnet sind, der sich von dem definierten Abstand der Abstützkante 258 anderer Fixierelemente 252 unterscheidet.

Eine derartige Anordnung der Fixiervorsprünge 252 mit Abstützkanten 258 in unterschiedlichem Abstand von dem ersten Gehäuseabschnitt 104 ermöglicht somit einen Toleranzausgleich hinsichtlich Toleranzen des Abstandes der Stufenfläche 244 in der Aufnahme 72 von der ersten Außenseite 74, an welcher der erste Gehäuseabschnitt 104 anliegt, wobei diese Toleranzen dadurch bedingt sind, dass die gesamte Aufnahme 72 und der Aufnahmebereich 60 und somit auch die Stufe 242 mit der Stufenfläche 244 als Schmiedeteil hergestellt sind, woraus Toleranzen im Abstand zwischen der Außenseite 74 und der Stufenfläche 244 resultieren können.

Liegen die Toleranzen innerhalb des Bereichs der verschiedenen Abstände der Abstützkanten 258 der Fixiervorsprünge 252 von dem ersten Gehäuseabschnitt 104, so werden sich stets Fixiervorsprünge 252 finden, die auf oder oberhalb der Stufenfläche 244 liegen und somit die Möglichkeit haben, beim Einsetzen des Gehäuses 102 in radialer Richtung 254 in ihre ursprüngliche Stellung überzugehen und somit das Gehäuse 102 in der Aufnahme 72 im Wesentlichen spielfrei festzulegen.

Hinsichtlich der Ausbildung des Abschlussdeckels 132 wurden keine detaillierten Angaben gemacht. Beispielsweise kann der Abschlussdeckel 132 mit und ohne Kabelzuführung 138 versehen sein.

In jedem Fall verschließt der Abschlussdeckel 132 die Zugangsöffnung 128 zum zweiten Gehäuseabschnitt 106 in gleicher Weise wie bei dem ersten bis dritten und fünften Ausführungsbeispiel beschrieben.

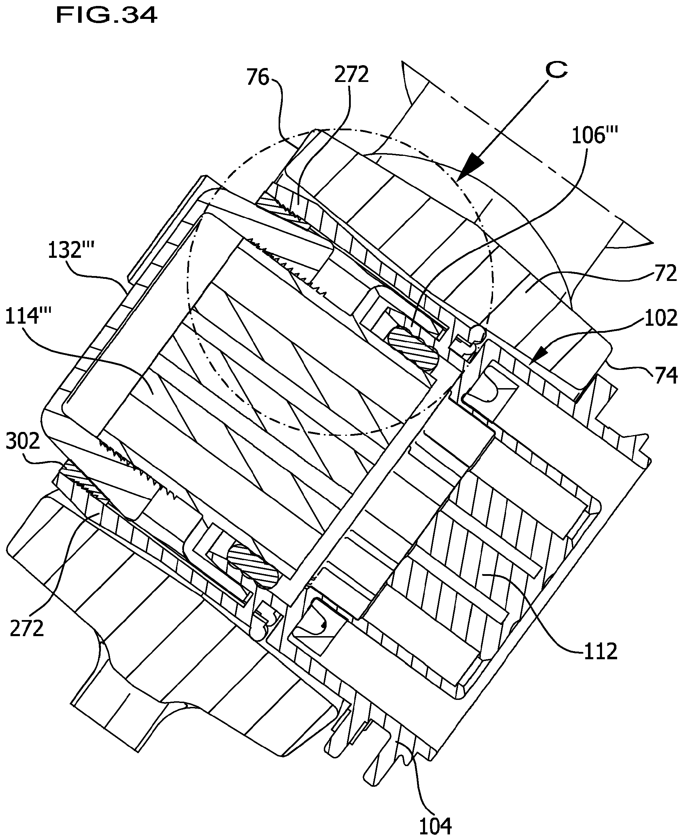

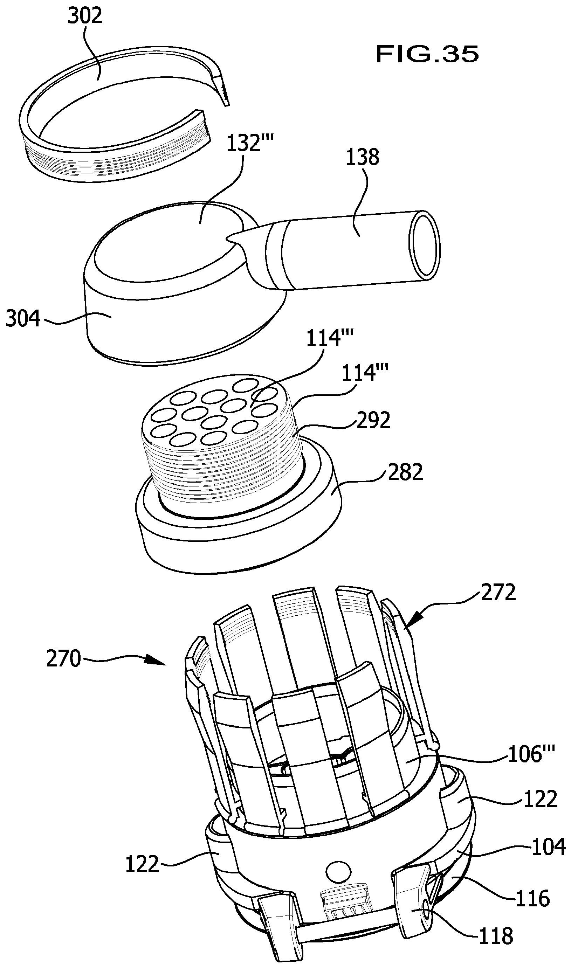

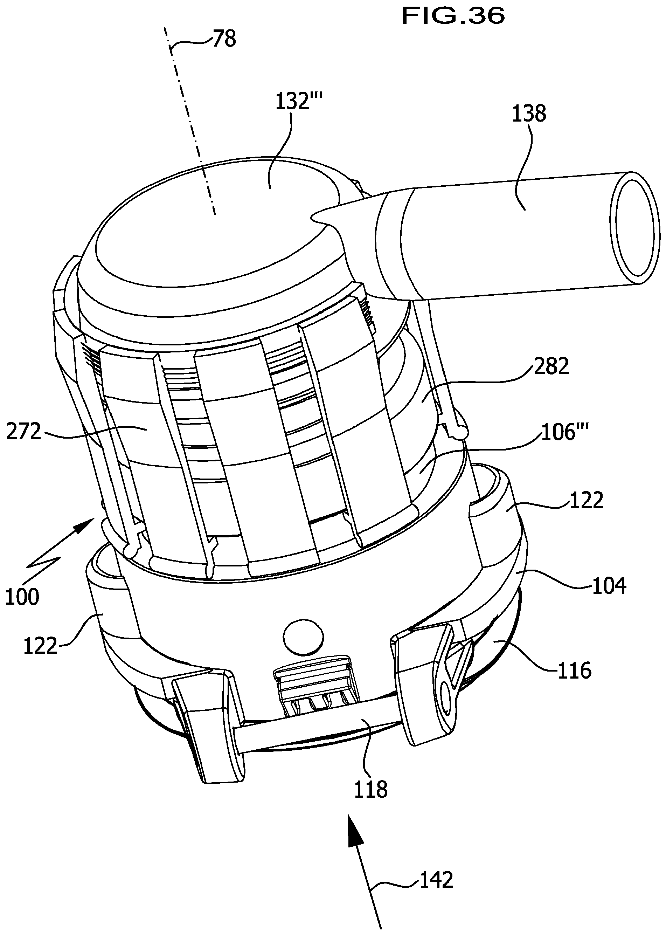

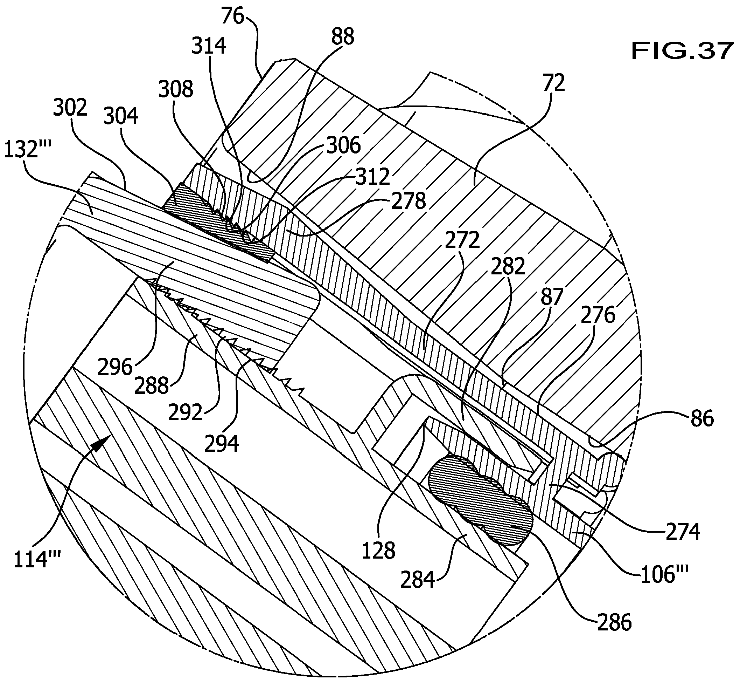

Bei einem siebten Ausführungsbeispiel, dargestellt in den Fig. 34 bis 37, sind ebenfalls diejenigen Elemente, die mit den voranstehenden Ausführungsbeispielen identisch sind, mit denselben Bezugszeichen versehen, so dass ebenfalls auf die Ausführungen zu sämtlichen voranstehenden Ausführungsbeispielen Bezug genommen werden kann.

Im Gegensatz zu den voranstehenden Ausführungsbeispielen ist bei dem siebten Ausführungsbeispiel der zweite Gehäuseabschnitt 106‴ so ausgebildet, dass an diesen an seiner Außenseite als Fixiereinheit 270 mindestens zwei, vorzugsweise mehrere, beispielsweise als Kranz angeordnete, Fixierzungen 272 angeformt sind, welche sich längs einer Außenseite 276 des zweiten Gehäuseabschnitts 106‴ und gegebenenfalls über diesen hinaus erstrecken.

Die Fixierzungen 272 sind beispielsweise über einen Haltesteg 274 mit dem zweiten Gehäuseabschnitt 106‴ verbunden und erstrecken sich beispielsweise im Abstand von der Außenseite 276 des zweiten Gehäuseabschnitts 106‴ über die Zugangsöffnung 128 hinaus bis zu keilförmig ausgebildeten Endbereichen 278.

Bei diesem Ausführungsbeispiel ist allerdings das Leitungsanschlusselement 114"' nicht in dem Gehäuseinnenraum 108 des zweiten Gehäuseabschnitts 106‴ angeordnet, sondern auf den zweiten Gehäuseabschnitt 106‴ aufsetzbar und zwar mit einem die Außenseite 276 des zweiten Gehäuseabschnitts 106‴ umschließenden zylindrischen Führungskörper 282, der sich insbesondere im Wesentlichen bis zu den Haltestegen 274 der Fixierzungen 270 erstreckt und das Leitungsanschlusselement 114‴ führt, wobei dieses sich gleichzeitig mit einem zylindrischen Ansatz 284 durch die Zugangsöffnung 128 des zweiten Gehäuseabschnitts 106‴ in diesen hineinerstreckt, so dass zwischen dem zylindrischen Ansatz 284 und einer Innenfläche des zweiten Gehäuseabschnitts 106‴ ein Dichtelement 286 zum dichten Abschluss einsetzbar ist.

Darüber hinaus bildet das Leitungsanschlusselement 114'‴ in einem nahe der zweiten Außenseite 76 liegenden Bereich 288 Rastflächen 292 aus, auf welche der Abschlussdeckel 132‴ aufsetzbar und mit welchen der Abschlussdeckel 132‴ mit einer Innenfläche 294 seines zylindrischen Ansatzes 136 verrastbar ist.

Zum Spreizen der keilförmigen Endbereiche 278 der Fixierzungen 272 ist zwischen die mit den Rastkonturen 292 verrastbaren Wandflächen 296 des zylindrischen Ansatzes 136 des Abschlussdeckels 132‴ und den keilförmigen Endbereichen 278 der Rastzungen 272 ein Keilkörper 302 einsetzbar, welcher einerseits sich an einer Außenseite 304 der Wandflächen 296 des zylindrischen Ansatzes 136 des Abschlussdeckels 132‴ abstützt und andererseits auf die keilförmig ausgebildeten Endbereiche 278 wirkt, um diese nahe der zweiten Außenseite 76 des Aufnahmebereichs 60 an den sich konisch erweiternden Wandbereich 88 kraftbeaufschlagt anzulegen und somit das Gehäuse 102 gegen ein Lösen aus der Aufnahme 72 durch eine Bewegung entgegengesetzt zur Einschieberichtung 142 zu fixieren.

Zur Fixierung des Keilkörpers 302 in seiner die Fixierzungen 272 verkeilenden Stellung sind die Fixierzungen 272 und der Keilkörper 302 auf ihren aneinander anliegenden Seiten 306 und 308 mit ineinandergreifenden Rastelementen 312 und 314 versehen.

Auch bei dieser Lösung lässt sich trotz Fertigungstoleranzen im Aufnahmebereich 60 die Einbaueinheit 100 einfach und spielfrei montieren.

Hinsichtlich aller übrigen Merkmale, die mit denen der voranstehenden Ausführungsbeispiele identisch sind, wird ferner vollinhaltlich auf die Ausführungen zu diesen voranstehenden Ausführungsbeispielen Bezug genommen.

## Patentansprüche

1. Einbaueinheit für ein an einer Karosserie eines Kraftfahrzeugs angeordnetes Trägerelement (40) einer Trägereinheit (20), wobei die Einbaueinheit eine Steckdose für einen mit dem Kraftfahrzeug verbindbaren Anhänger oder einen Lastenträger und/oder eine Steuereinheit für eine Komponente der Trägereinheit und/oder des Anhängers und/oder Lastenträgers umfasst, wobei die Einbaueinheit ein Gehäuse (102) mit einem sich auf einer ersten Außenseite (74) an einem Aufnahmebereich (60) des Trägerelements (40) abstützenden ersten Gehäuseabschnitt (104) und einem in eine Aufnahme (72) des Aufnahmebereichs (60) des Trägerelements (40) eingreifenden zweiten Gehäuseabschnitt (106) sowie eine sich bei in der Aufnahme (72) montierter Einbaueinheit (100) an dem Aufnahmebereich (60) abstützende Fixiereinheit (150, 170, 200, 220, 250, 300) umfasst, wobei die Fixiereinheit (150, 170, 200, 220, 250, 300) bei an dem Aufnahmebereich (60) fixierter Einbaueinheit (100) mit dem Gehäuse (102), insbesondere mit dem zweiten Gehäuseabschnitt (106), verbunden ist **dadurch gekennzeichnet, dass** an dem Gehäuse (102), insbesondere an dem zweiten Gehäuseabschnitt (106), mindestens ein Vorsprung (122) angeordnet ist, der in eine in dem Aufnahmebereich (60) angeordnete Ausnehmung (124) eingreift und das Gehäuse (102) drehfest in der Aufnahme (72) festlegt, dass das Gehäuse (102) mit der Fixiereinheit (150, 170, 200, 220, 250, 300) an dem Aufnahmebereich (60) gegen eine Bewegung entgegengesetzt zur Einschieberichtung (142) abgestützt ist, , dass die Fixiereinheit ein sich an einer zweiten, der ersten Außenseite (74) gegenüberliegenden, Außenseite (76) des Aufnahmebereichs (60) abstützendes Fixierelement (150, 170, 200, 220) umfasst, dass das Fixierelement (150, 170) Halteanker (156) umfasst, die sich zwischen dem zweiten Gehäuseabschnitt (106) und einer Innenwand (84) des Aufnahmekanals (82) der Aufnahme (72) erstrecken und an Lageraufnahmen (122) des Gehäuses (102) fixierbar sind, insbesondere bei an dem Aufnahmebereich (60) fixierter Einbaueinheit (100) fixiert sind, oder dass die Fixiereinheit (170) zur Fixierung des Auflagekörpers (172) Schraubanker (176), umfasst, die sich zwischen dem zweiten Gehäuseabschnitt (106) und einer Innenwand (84) des Aufnahmekanals (82) der Aufnahme (72) erstrecken und endseitig in Lageraufnahmen (122) des Gehäuses (102) eingreifen, und dass der mindestens eine Vorsprung (122) als eine der Lageraufnahmen ausgebildet ist.

2. Einbaueinheit nach Anspruch 1, **dadurch gekennzeichnet, dass** der mindestens eine Vorsprung (122) an dem zweiten Gehäuseabschnitt (106) im Anschluss an den ersten Gehäuseabschnitt (104) angeformt ist und/oder dass insbesondere an dem Gehäuse (102), insbesondere an dem zweiten Gehäuseabschnitt (106), mehrere Vorsprünge (122) angeordnet sind, von denen jeder in eine in dem Aufnahmebereich (60) angeordnete Ausnehmung (124) eingreift.

3. Einbaueinheit nach Anspruch 1 oder 2, **dadurch gekennzeichnet, dass** die Halteanker (156) endseitig mit Rastelementen (158) versehen sind, die im fixierten Zustand der Einbaueinheit (100) in in der jeweiligen Lageraufnahme (122) angeordnete Rastaufnahmen (162) eingreifen.

4. Einbaueinheit nach einem der voranstehenden Ansprüche, **dadurch gekennzeichnet, dass** das Fixierelement (150) einen Auflagekörper (152) umfasst, der insbesondere als Ringkörper ausgebildet ist, insbesondere dass der Auflagekörper (152) mit Auflagevorsprüngen (154) versehen ist, die so ausgebildet sind, dass sie im fixierten Zustand der Einbaueinheit (100) an der zweiten Außenseite (76) des Aufnahmebereichs (60) anliegen und sich an diesem abstützen, insbesondere dass der Auflagekörper (152, 172) in Richtung der Zugangsseite (130) des zweiten Gehäuseabschnitts (106) gewölbt ist und dass die Halteanker (156) oder Schraubanker (176) in den Bereichen des Auflagekörpers (152, 172) mit dem größten Abstand von der Zugangsseite (130) an diesem angreifen..

5. Einbaueinheit nach Anspruch 1, **dadurch gekennzeichnet, dass** die Schraubanker (176) in in den Lageraufnahmen (122) des Gehäuses (102) angeordnete Schraubaufnahmen (178) einschraubbar sind.

6. Einbaueinheit nach einem der voranstehenden Ansprüche, **dadurch gekennzeichnet, dass** die Lageraufnahmen (122) an dem zweiten Gehäuseabschnitt (106) angeordnet sind.

7. Einbaueinheit für ein an einer Karosserie eines Kraftfahrzeugs angeordnetes Trägerelement (40) einer Trägereinheit (20), wobei die Einbaueinheit eine Steckdose für einen mit dem Kraftfahrzeug verbindbaren Anhänger oder einen Lastenträger und/oder eine Steuereinheit für eine Komponente der Trägereinheit und/oder des Anhängers und/oder Lastenträgers umfasst, wobei die Einbaueinheit ein Gehäuse (102) mit einem sich auf einer ersten Außenseite (74) an einem Aufnahmebereich (60) des Trägerelements (40) abstützenden ersten Gehäuseabschnitt (104) und einem in eine Aufnahme (72) des Aufnahmebereichs (60) des Trägerelements (40) eingreifenden zweiten Gehäuseabschnitt (106) sowie eine sich bei in der Aufnahme (72) montierter Einbaueinheit (100) an dem Aufnahmebereich (60) abstützende Fixiereinheit (150, 170, 200, 220, 250, 300) umfasst, wobei die Fixiereinheit (150, 170, 200, 220, 250, 300) bei an dem Aufnahmebereich (60) fixierter Einbaueinheit (100) mit dem Gehäuse (102), insbesondere mit dem zweiten Gehäuseabschnitt (106), verbunden ist, **dadurch gekennzeichnet, dass** das Fixierelement (202) mit Fixierzungen (208) versehen ist, welche an einem Fixierabschnitt (192) des zweiten Gehäuseabschnitts (106) festlegbar sind und dass bei an dem Aufnahmebereich (60) fixierter Einbaueinheit (100) der zweite Gehäuseabschnitt (106) mit dem Fixierabschnitt (192) über die zweite Außenseite (76) des Aufnahmebereichs (60) übersteht.

8. Einbaueinheit nach Anspruch 7, **dadurch gekennzeichnet, dass** das Fixierelement (202) einen sich ungefähr parallel zu einer quer zur Mittelachse (78) verlaufenden Ebene erstreckenden Flachbereich (204) aufweist, der die sich radial zur Mittelachse (78) erstreckenden Fixierzungen (208) trägt, insbesondere dass der Flachbereich (204) im an dem Aufnahmebereich (60) fixierten Zustand der Einbaueinheit (100) an der zweiten Außenseite (76) anliegt, und/oder dass insbesondere das Fixierelement (202) einen Haltebügel (216) aufweist, der eine Kabelzuführung (138) übergreift.

9. Einbaueinheit für ein an einer Karosserie eines Kraftfahrzeugs angeordnetes Trägerelement (40) einer Trägereinheit (20), wobei die Einbaueinheit eine Steckdose für einen mit dem Kraftfahrzeug verbindbaren Anhänger oder einen Lastenträger und/oder eine Steuereinheit für eine Komponente der Trägereinheit und/oder des Anhängers und/oder Lastenträgers umfasst, wobei die Einbaueinheit ein Gehäuse (102) mit einem sich auf einer ersten Außenseite (74) an einem Aufnahmebereich (60) des Trägerelements (40) abstützenden ersten Gehäuseabschnitt (104) und einem in eine Aufnahme (72) des Aufnahmebereichs (60) des Trägerelements (40) eingreifenden zweiten Gehäuseabschnitt (106) sowie eine sich bei in der Aufnahme (72) montierter Einbaueinheit (100) an dem Aufnahmebereich (60) abstützende Fixiereinheit (150, 170, 200, 220, 250, 300) umfasst, wobei die Fixiereinheit (150, 170, 200, 220, 250, 300) bei an dem Aufnahmebereich (60) fixierter Einbaueinheit (100) mit dem Gehäuse (102), insbesondere mit dem zweiten Gehäuseabschnitt (106), verbunden ist, **dadurch gekennzeichnet, dass** die Fixiereinheit (250) an dem zweiten Gehäuseabschnitt (106) gehaltene Fixiervorsprünge (252) umfasst, und dass die Fixiervorsprünge (252) durch elastische Deformation zumindest in Richtung einer Umlaufrichtung (256) um den zweiten Gehäuseabschnitt (106) relativ zu diesem bewegbar sind.

10. Einbaueinheit nach Anspruch 9, **dadurch gekennzeichnet, dass** das Gehäuse (102) im an dem Aufnahmebereich (60) fixierten Zustand sich mittels der Fixiervorsprünge (252) an einer Stufe (242) am Aufnahmebereich (60), insbesondere im Aufnahmekanal (82) der Aufnahme (72), abstützt, insbesondere dass die Fixiervorsprünge (252) sich selbsttätig in eine Abstützstellung bewegend ausgebildet sind, in welcher sie sich mit einer Abstützseite (258) an der Stufe (242) des Aufnahmebereichs (60) abstützen.

11. Einbaueinheit nach Anspruch 10, **dadurch gekennzeichnet, dass** die Fixiervorsprünge (252) einstückig an den zweiten Gehäuseabschnitt (106) angeformt sind.

12. Einbaueinheit nach einem der Ansprüche 10 bis 11, **dadurch gekennzeichnet, dass** die Fixiervorsprünge (252) sich sowohl in einer radialen Richtung (254) und/oder in einer Umlaufrichtung (256) um den zweiten Gehäuseabschnitt (106) erstrecken, insbesondere dass die Fixiervorsprünge (252) durch elastische Deformation zumindest in radialer Richtung (254) relativ zum zweiten Gehäuseabschnitt (106) bewegbar sind.

13. Einbaueinheit nach einem der Ansprüche 9 bis 12, **dadurch gekennzeichnet, dass** die Fixiervorsprünge (252) in Form von sich quer zu einer Stufenfläche (244) der Stufe (242) erstreckenden Lamellen (251) ausgebildet sind, die an ihrer Längsseite (253) mit dem zweiten Gehäuseabschnitt (106) verbunden sind, insbesondere dass die Lamellen (251) sich quer zur Längsseite (253) erstreckende Abstützkanten (258) aufweisen, mit welchen sich diese auf der Stufenfläche (244) des Aufnahmebereichs (60) abstützen, insbesondere dass bei einer Vielzahl von Fixiervorsprüngen (252) unterschiedliche der Fixiervorsprünge (252) mit ihren Abstützkanten (258) in unterschiedlichen Abständen von dem ersten Gehäuseabschnitt (104) angeordnet sind.

14. Einbaueinheit nach einem der Ansprüche 9 bis 13, **dadurch gekennzeichnet, dass** die Fixiervorsprünge (252) quer zur Längsseite (253) verlaufende Einschwenkkanten (262) aufweisen, welche beim Anliegen an eine Innenwand (84) des Aufnahmekanals (82) die Fixiervorsprünge (252) in radialer Richtung (254) und/oder in Umlaufrichtung (256) deformieren, um den zweiten Gehäuseabschnitt (106) mit den Fixiervorsprüngen (252) durch den Aufnahmekanal (82) von der ersten Aufnahmeseite (74) bis zur Stufe (242) des Aufnahmebereichs (60) zu bewegen.

15. Einbaueinheit für ein an einer Karosserie eines Kraftfahrzeugs angeordnetes Trägerelement (40) einer Trägereinheit (20), wobei die Einbaueinheit eine Steckdose für einen mit dem Kraftfahrzeug verbindbaren Anhänger oder einen Lastenträger und/oder eine Steuereinheit für eine Komponente der Trägereinheit und/oder des Anhängers und/oder Lastenträgers umfasst, wobei die Einbaueinheit ein Gehäuse (102) mit einem sich auf einer ersten Außenseite (74) an einem Aufnahmebereich (60) des Trägerelements (40) abstützenden ersten Gehäuseabschnitt (104) und einem in eine Aufnahme (72) des Aufnahmebereichs (60) des Trägerelements (40) eingreifenden zweiten Gehäuseabschnitt (106) sowie eine sich bei in der Aufnahme (72) montierter Einbaueinheit (100) an dem Aufnahmebereich (60) abstützende Fixiereinheit (150, 170, 200, 220, 250, 300) umfasst, wobei die Fixiereinheit (150, 170, 200, 220, 250, 300) bei an dem Aufnahmebereich (60) fixierter Einbaueinheit (100) mit dem Gehäuse (102), insbesondere mit dem zweiten Gehäuseabschnitt (106), verbunden ist, **dadurch gekennzeichnet, dass** die Fixiereinheit (270) eine Vielzahl von Fixierzungen (272) umfasst, die an dem zweiten Gehäuseabschnitt (106) gehalten sind und dass die Fixierzungen (272) in radialer Richtung zu einer Mittelachse (78) des zweiten Gehäuseabschnitts (106) durch einen Keilkörper (302) beaufschlagbar und dadurch an dem Aufnahmebereich (60), insbesondere an einer Innenwand (84) des Aufnahmekanals (82), anlegbar und mit dieser verkeilbar sind.

16. Einbaueinheit nach Anspruch 15, **dadurch gekennzeichnet, dass** die Fixierzungen (272) einstückig an den zweiten Gehäuseabschnitt (106) angeformt sind und/oder dass insbesondere die Fixierzungen (272) sich ungefähr parallel zur Einschieberichtung (142) erstrecken.

17. Einbaueinheit nach Anspruch 15 oder 16, **dadurch gekennzeichnet, dass** insbesondere der Keilkörper (302) als Ringkörper ausgebildet ist und/oder dass insbesondere der Keilkörper (302) an dem Gehäuse (102), insbesondere an einem Abschlussdeckel (132‴) des Gehäuses (102), abgestützt und geführt ist, dass insbesondere der Keilkörper (302) durch Rastelemente (312, 314) in seiner die Fixierzungen (272) beaufschlagenden Stellung fixiert ist.

## Claims

1. An installation unit for a carrier element (40) of a carrier unit (20) that is arranged on a body of a motor vehicle, comprising a housing (102), wherein the installation unit comprises a plug socket for a trailer which is connectable to the motor vehicle or a load carrier and/or a control unit for a component of the carrier unit and/or the trailer and/or load carrier, wherein the installation unit comprises a first housing portion (104) that, on a first outer side (74), is supported against a receiving region (60) of the carrier element (40), and a second housing portion (106) that engages in a receptacle (72) of the receiving region (60) of the carrier element (40), and a fixing unit (150, 170, 200, 220, 250, 300) that, when the installation unit (100) is mounted in the receptacle (72), is supported against the receiving region (60), wherein, when the installation unit (100) is fixed on the receiving region (60), the fixing unit (150, 170, 200, 220, 250, 300) is connected to the housing (102), in particular to the second housing portion (106), **characterized in that** there is arranged on the housing (102), in particular on the second housing portion (106), at least one projection (122) which engages in a recess (124) that is arranged in the receiving region (60), and which fixes the housing (102) in the receptacle (72) such that it cannot rotate, **in that** the housing (102) is supported against the receiving region (60) by the fixing unit (150, 170, 200, 220, 250, 300) to prevent movement counter to the direction of pushing in (142), **in that** the fixing unit comprises a fixing element (150, 170, 200, 220) that is supported against a second outer side (76) of the receiving region (60) that is opposite to the first outer side (74), **in that** the fixing element (150, 170) comprises holding anchors (156), which extend between the second housing portion (106) and an inner wall (84) of the receiving channel (82) of the receptacle (72) and are fixable on bearing receptacles (122) of the housing (102), in particular being fixed when the installation unit (100) is fixed on the receiving region (60), or **in that** the fixing unit (170) for fixing the seating body (172) comprises screwing anchors (176) that extend between the second housing portion (106) and an inner wall (84) of the receiving channel (82) of the receptacle (72) and, at the end, engage in bearing receptacles (122) of the housing (102), and **in that** the at least one projection (122) is formed as one of the bearing receptacles.

2. The installation unit as claimed in claim 1, **characterized in that** the at least one projection (122) is integrally formed on the second housing portion (106) in a manner adjoining the first housing portion (104) and/or **in that** in particular there is arranged on the housing (102), in particular on the second housing portion (106), a plurality of projections (122) of which each engages in a recess (124) arranged in the receiving region (60).

3. The installation unit as claimed in claim 1 or 2, **characterized in that** the holding anchors (156) are provided at the end with latching elements (158) which, when the installation unit (100) is in the fixed condition, engage in latching receptacles (162) that are arranged in the respective bearing receptacle (122).

4. The installation unit as claimed in one of the preceding claims, **characterized in that** the fixing element (150) comprises a seating body (152), which takes the form in particular of an annular body, in particular **in that** the seating body (152) is provided with seating projections (154) that are formed such that, in the fixed condition of the installation unit (100), they abut against the second outer side (76) of the receiving region (60) and are supported against the receiving region (60), in particular **in that** the seating body (152, 172) is convex in the direction of the access side (130) of the second housing portion (106) and **in that** the holding anchors (156) or screwing anchors (176) in the regions of the seating body (152, 172) that are at the greatest spacing from the access side (130) act on the seating body (152, 172).

5. The installation unit as claimed in claim 1, **characterized in that** the screwing anchors (176) are configured to screw into screw receptacles (178) arranged in the bearing receptacles (122) of the housing (102).

6. The installation unit as claimed in one of the preceding claims, **characterized in that** the bearing receptacles (122) are arranged on the second housing portion (106).

7. An installation unit for a carrier element (40) of a carrier unit (20) that is arranged on a body of a motor vehicle, comprising a housing (102), wherein the installation unit comprises a plug socket for a trailer which is connectable to the motor vehicle or a load carrier and/or a control unit for a component of the carrier element and/or the trailer and/or load carrier, wherein the installation unit comprises a first housing portion (104) that, on a first outer side (74), is supported against a receiving region (60) of the carrier element (40), and a second housing portion (106) that engages in a receptacle (72) of the receiving region (60) of the carrier element (40), and a fixing unit (150, 170, 200, 220, 250, 300) that, when the installation unit (100) is mounted in the receptacle (72), is supported against the receiving region (60), wherein, when the installation unit (100) is fixed on the receiving region (60), the fixing unit (150, 170, 200, 220, 250, 300) is connected to the housing (102), in particular to the second housing portion (106), **characterized in that** the fixing element (202) is provided with fixing tabs (208) that are configured to be fixed to a fixing portion (192) of the second housing portion (106) and **in that** when the installation unit (100) is fixed on the receiving region (60), the second housing portion (106) projects beyond the second outer side (76) of the receiving region (60) by means of the fixing portion (192).

8. The installation unit as claimed in claim 7, **characterized in that** the fixing element (202) has a flat region (204) which extends approximately parallel to a plane running transversely to the center axis (78) and carries fixing tabs (208) that extend radially in relation to the center axis (78), in particular **in that** the flat region (204), in the condition with the installation unit (100) fixed on the receiving region (60), abuts against the second outer side (76), and/or **in that** in particular the fixing element (202) has a holding bracket (216) that engages over a cable feed (138).

9. An installation unit for a carrier element (40) of a carrier unit (20) that is arranged on a body of a motor vehicle, comprising a housing (102), wherein the installation unit comprises a plug socket for a trailer which is connectable to the motor vehicle or a load carrier and/or a control unit for a component of the carrier element and/or the trailer and/or load carrier, wherein the installation unit comprises a first housing portion (104) that, on a first outer side (74), is supported against a receiving region (60) of the carrier element (40), and a second housing portion (106) that engages in a receptacle (72) of the receiving region (60) of the carrier element (40), and a fixing unit (150, 170, 200, 220, 250, 300) that, when the installation unit (100) is mounted in the receptacle (72), is supported against the receiving region (60), wherein, when the installation unit (100) is fixed on the receiving region (60), the fixing unit (150, 170, 200, 220, 250, 300) is connected to the housing (102), in particular to the second housing portion (106), **characterized in that** the fixing unit (250) comprises fixing projections (252) that are held on the second housing portion (106), and **in that** the fixing projections (252) are movable by resilient deformation relative to the second housing portion (106), at least in a direction of a peripheral direction (256) around the second housing portion (106).

10. The installation unit as claimed in claim 9, **characterized in that**, when the housing (102) is in the condition fixed on the receiving region (60), it is supported by the fixing projections (252) against a step (242) on the receiving region (60), in particular in the receiving channel (82) of the receptacle (72), in particular **in that** the fixing projections (252) take a form such that they move automatically into a support position, in which they are supported with a support side (258) against the step (242) of the receiving region (60).

11. The installation unit as claimed in claim 10, **characterized in that** the fixing projections (252) are integrally formed in one piece with the second housing portion (106).

12. The installation unit as claimed in one of claims 10 or 11, **characterized in that** the fixing projections (252) extend in both a radial direction (254) and/or a peripheral direction (256) around the second housing portion (106), in particular in that the fixing projections (252) are movable by resilient deformation, at least in the radial direction (254) relative to the second housing portion (106).

13. The installation unit as claimed in one of claims 9 to 12, **characterized in that** the fixing projections (252) are made in the form of blades (251) that extend transversely to a step face (244) of the step (242) and are connected on their longitudinal side (253) to the second housing portion (106), in particular **in that** the blades (251) have support edges (258) that extend transversely to the longitudinal side (253) and by which they are supported on the step face (244) of the receiving region (60), in particular **in that** where there is a multiplicity of fixing projections (252), different ones of the fixing projections (252) are arranged with their support edges (258) at different spacings from the first housing portion (104).

14. The installation unit as claimed in one of claims 9 to 13, **characterized in that** the fixing projections (252) have inwardly pivotal edges (262) that run transversely to the longitudinal side (253) and that, on abutment against an inner wall (84) of the receiving channel (82), deform the fixing projections (252) in the radial direction (254) and/or the peripheral direction (256) in order to move the second housing portion (106) with the fixing projections (252) through the receiving channel (82) from the first receiving side (74) to the step (242) of the receiving region (60).

15. An installation unit for a carrier element (40) of a carrier unit (20) that is arranged on a body of a motor vehicle, comprising a housing (102), wherein the installation unit comprises a plug socket for a trailer which is connectable to the motor vehicle or a load carrier and/or a control unit for a component of the carrier element and/or the trailer and/or load carrier, wherein the installation unit comprises a first housing portion (104) that, on a first outer side (74), is supported against a receiving region (60) of the carrier element (40), and a second housing portion (106) that engages in a receptacle (72) of the receiving region (60) of the carrier element (40), and a fixing unit (150, 170, 200, 220, 250, 300) that, when the installation unit (100) is mounted in the receptacle (72), is supported against the receiving region (60), wherein, when the installation unit (100) is fixed on the receiving region (60), the fixing unit (150, 170, 200, 220, 250, 300) is connected to the housing (102), in particular to the second housing portion (106), **characterized in that** the fixing unit (270) comprises a multiplicity of fixing tabs (272) that are held on the second housing portion (106) and **in that** the fixing tabs (272) are configured to be urged by a wedge body (302) in the radial direction relative to a center axis (78) of the second housing portion (106) and thus to abut against the receiving region (60), in particular an inner wall (84) of the receiving channel (82), and to be wedged thereby.

16. The installation unit as claimed in claim 15, **characterized in that** the fixing tabs (272) are integrally formed in one piece with the second housing portion (106) and/or **in that** in particular the fixing tabs (272) extend approximately parallel to the direction of pushing in (142).

17. The installation unit as claimed in claim 15 or 16, **characterized in that** in particular the wedge body (302) takes the form of an annular body and/or **in that** in particular the wedge body (302) is supported and guided on the housing (102), in particular on a closing-off cover (132"') of the housing (102), **in that** in particular the wedge body (302) is fixed by latching elements (312, 314) in its position in which it urges the fixing tabs (272).

## Revendications

1. Unité d'installation pour un élément de support (40) d'une unité de support (20) disposé sur une carrosserie d'un véhicule à moteur, dans laquelle l'unité d'installation comprend une prise pour une remorque ou un porte-charges pouvant être raccordée/raccordé au véhicule à moteur et/ou une unité de commande pour un composant de l'unité de support et/ou de la remorque et/ou du porte-charges, dans laquelle l'unité d'installation comprend un boîtier (102) avec une première section de boîtier (104) prenant appui sur un premier côté extérieur (74) sur une zone de réception (60) de l'élément de support (40) et une deuxième section de boîtier (106) venant en prise avec un logement (72) de la zone de réception (60) de l'élément de support (40), ainsi qu'une unité de fixation (150, 170, 200, 220, 250, 300) prenant appui sur la zone de réception (60) lorsque l'unité d'installation (100) est montée dans le logement (72), dans laquelle l'unité de fixation (150, 170, 200, 220, 250, 300) est raccordée au boîtier (102), en particulier à la deuxième section de boîtier (106) lorsque l'une unité d'installation (100) est fixée sur la zone de réception (60), **caractérisée en ce qu'**est disposée, sur le boîtier (102), en particulier sur la deuxième section de boîtier (106), au moins une partie faisant saillie (122), qui vient en prise avec un évidement (124) disposé dans la zone de réception (60) et immobilise le boîtier (102) de manière solidaire en rotation dans le logement (72), que le boîtier (102) prend appui avec l'unité de fixation (150, 170, 200, 220, 250, 300) sur la zone de réception (60) contre un déplacement à l'opposé à la direction d'insertion (142), que l'unité de fixation comprend un élément de fixation (150, 170, 200, 220) prenant appui sur un deuxième côté extérieur (76) de la zone de réception (60) faisant face au premier côté extérieur (74), que l'élément de fixation (150, 170) comprend des ancrages de maintien (156) qui s'étendent entre la deuxième section de boîtier (106) et une paroi intérieure (84) du canal de réception (82) du logement (72) et peuvent être fixés sur des logements de palier (122) du boîtier (102), en particulier sont fixés lorsque l'unité d'installation (100) est fixée sur la zone de réception (60), ou que l'unité de fixation (170) comprend pour la fixation du corps d'appui (172) des ancrages à vis (176), qui s'étendent entre la deuxième section de boîtier (106) et une paroi intérieure (84) du canal de réception (82) du logement (72) et viennent en prise côté extrémité avec des logements de palier (122) du boîtier (102), et que l'au moins une partie faisant saillie (122) est réalisée comme un des logements de palier.

2. Unité d'installation selon la revendication 1, **caractérisée en ce que** l'au moins partie faisant une saillie (122) est formée sur la deuxième section de boîtier (106) directement dans le prolongement de la première section de boîtier (104) et/ou que plusieurs parties faisant saillie (122), dont chacune vient en prise avec un évidement (124) disposé dans la zone de réception (60), sont disposées en particulier sur le boîtier (102), en particulier sur la deuxième section de boîtier (106).

3. Unité d'installation selon la revendication 1 ou 2, **caractérisée en ce que** les ancrages de maintien (156) sont pourvus côté extrémité d'éléments d'encliquetage (158), qui viennent en prise dans l'état fixé de l'unité d'installation (100) avec des logements d'encliquetage (162) disposés dans le logement de palier (122) respectif.

4. Unité d'installation selon l'une quelconque des revendications précédentes, **caractérisée en ce que** l'élément de fixation (150) comprend un corps d'appui (152), qui est réalisé en particulier comme un corps annulaire, en particulier que le corps d'appui (152) est pourvu de parties faisant saillie d'appui (154) qui sont réalisées de sorte qu'elles reposent dans l'état fixé de l'unité d'installation (100) sur le deuxième côté extérieur (76) de la zone de réception (60) et prennent appui sur celle-ci, en particulier que le corps d'appui (152, 172) est bombé en direction du côté d'accès (130) de la deuxième section de boîtier (106) et que les ancrages de retenue (156) ou les ancrages à vis (176) s'engagent dans les zones du corps d'appui (152, 172) sur celui-ci avec la plus grande distance du côté d'accès (130) .

5. Unité d'installation selon la revendication 1, **caractérisée en ce que** les ancrages à vis (176) peuvent être vissés dans des logements à vis (178) disposés dans les logements de palier (122) du boîtier (102).

6. Unité d'installation selon l'une quelconque des revendications précédentes, **caractérisée en ce que** les logements de palier (122) sont disposés sur la deuxième section de boîtier (106).

7. Unité d'installation pour un élément de support (40) d'une unité de support (20) disposé sur une carrosserie d'un véhicule à moteur, dans laquelle l'unité d'installation comprend une prise pour une remorque ou un porte-charges pouvant être raccordée/raccordé au véhicule à moteur et/ou une unité de commande pour un composant de l'unité de support et/ou de la remorque et/ou du porte-charges, dans laquelle l'unité d'installation comprend un boîtier (102) avec une première section de boîtier (104) prenant appui sur un premier côté extérieur (74) sur une zone de réception (60) de l'élément de support (40) et une deuxième section de boîtier (106) venant en prise avec un logement (72) de la zone de réception (60) de l'élément de support (40), ainsi qu'une unité de fixation (150, 170, 200, 220, 250, 300) prenant appui sur la zone de réception (60) lorsque l'unité d'installation (100) est montée dans le logement (72), dans laquelle l'unité de fixation (150, 170, 200, 220, 250, 300) est raccordée au boîtier (102), en particulier à la deuxième section de boîtier (106), lorsque l'une unité d'installation (100) est fixée sur la zone de réception (60), **caractérisée en ce que** l'élément de fixation (202) est pourvu de languettes de fixation (208) qui peuvent être immobilisées sur une section de fixation (192) de la deuxième section de boîtier (106) et que, lorsqu'une unité d'installation (100) est fixée sur la zone de réception (60), la deuxième section de boîtier (106) dépasse avec la section de fixation (192) du deuxième côté extérieur (76) de la zone de réception (60).

8. Unité d'installation selon la revendication 7, **caractérisée en ce que** l'élément de fixation (202) présente une zone plate (204) s'étendant approximativement parallèlement à un plan s'étendant transversalement à l'axe central (78), laquelle supporte les languettes de fixation (208) s'étendant radialement à l'axe central (78), en particulier que la zone plate (204) repose sur le deuxième côté extérieur (76) lorsque l'unité d'installation (100) est fixée sur la zone de réception (60), et/ou qu'en particulier l'élément de fixation (202) présente un étrier de maintien (216), qui recouvre une arrivée de câble (138).

9. Unité d'installation pour un élément de support (40) d'une unité de support (20) disposé sur une carrosserie d'un véhicule à moteur, dans laquelle l'unité d'installation comprend une prise pour une remorque ou un porte-charges pouvant être raccordée/raccordé au véhicule à moteur et/ou une unité de commande pour un composant de l'unité de support et/ou de la remorque et/ou du porte-charges, dans laquelle l'unité d'installation comprend un boîtier (102) avec une première section de boîtier (104) prenant appui sur un premier côté extérieur (74) sur une zone de réception (60) de l'élément de support (40) et une deuxième section de boîtier (106) venant en prise avec un logement (72) de la zone de réception (60) de l'élément de support (40), ainsi qu'une unité de fixation (150, 170, 200, 220, 250, 300) prenant appui sur la zone de réception (60) lorsque l'unité d'installation (100) est montée dans le logement (72), dans laquelle l'unité de fixation (150, 170, 200, 220, 250, 300) est raccordée au boîtier (102), en particulier à la deuxième section de boîtier (106), lorsqu'une unité d'installation (100) est fixée sur la zone de réception (60), **caractérisée en ce que** l'unité de fixation (250) comprend des parties faisant saillie de fixation (252) maintenues sur la deuxième section de boîtier (106), et que les parties faisant saillie de fixation (252) peuvent être déplacées par déformation élastique au moins en direction d'une direction périphérique (256) autour de la section de boîtier (106) par rapport à celle-ci.

10. Unité d'installation selon la revendication 9, **caractérisée en ce que** le boîtier (102) prend appui dans l'état fixé sur la zone de réception (60) au moyen des parties faisant saillie de fixation (252) sur un étage (242) sur la zone de réception (60), en particulier dans le canal de réception (82) du logement (72), en particulier que les parties faisant saillie de fixation (252) sont réalisées en mouvement de manière autonome dans une position d'appui, dans laquelle elles prennent appui par un côté d'appui (258) sur l'étage (242) de la zone de réception (60).

11. Unité d'installation selon la revendication 10, **caractérisée en ce que** les parties faisant saillie de fixation (252) sont formées d'une seule pièce sur la deuxième section de boîtier (106).

12. Unité d'installation selon l'une quelconque des revendications 10 à 11, **caractérisée en ce que** les parties faisant saillie de fixation (252) s'étendent à la fois dans une direction radiale (254) et/ou dans une direction périphérique (256) autour de la deuxième section de boîtier (106), en particulier que les parties faisant saillie de fixation (252) peuvent être déplacées par déformation élastique au moins dans la direction radiale (254) par rapport à la deuxième section de boîtier (106).

13. Unité d'installation selon l'une quelconque des revendications 9 à 12, **caractérisée en ce que** les parties faisant saillie de fixation (252) sont réalisées sous la forme de lamelles (251) s'étendant transversalement à une surface d'étage (244) de l'étage (242), qui sont raccordées sur leur côté longitudinal (253) à la deuxième section de boîtier (106), en particulier que les lamelles (251) présentent des arêtes d'appui (258) s'étendant transversalement au côté longitudinal (253), avec lesquelles elles prennent appui sur la surface d'étage (244) de la zone de réception (60), en particulier que, dans le cas d'une pluralité de parties faisant saillie de fixation (252), différentes parties faisant saillie de fixation des parties faisant saillie de fixation (252) sont disposées avec leurs bords d'appui (258) à des distances différentes de la première section de boîtier (104).

14. Unité d'installation selon l'une quelconque des revendications 9 à 13, **caractérisée en ce que** les parties faisant saillie de fixation (252) présentent des bords de pivotement rentrant (262) s'étendant transversalement au côté longitudinal (253), qui déforment dans la direction radiale (254) et/ou dans la direction périphérique (256) les parties faisant saillie de fixation (252) lorsqu'ils reposent sur une paroi intérieure (84) du canal de réception (82) pour déplacer la deuxième section de boîtier (106) avec les parties faisant saillie de fixation (252) à travers le canal de réception (82) du premier côté de réception (74) jusqu'à l'étage (242) de la zone de réception (60).

15. Unité d'installation pour un élément de support (40) d'une unité de support (20) disposé sur une carrosserie d'un véhicule à moteur, dans laquelle l'unité d'installation comprend une prise pour une remorque ou un porte-charges pouvant être raccordée/raccordé au véhicule à moteur et/ou une unité de commande pour un composant de l'unité de support et/ou de la remorque et/ou du porte-charges, dans laquelle l'unité d'installation comprend un boîtier (102) avec une première section de boîtier (104) prenant appui sur un premier côté extérieur (74) sur une zone de réception (60) de l'élément de support (40) et une deuxième section de boîtier (106) venant en prise avec un logement (72) de la zone de réception (60) de l'élément de support (40), ainsi qu'une unité de fixation (150, 170, 200, 220, 250, 300) prenant appui sur la zone de réception (60) lorsque l'unité d'installation (100) est montée dans le logement (72), dans laquelle l'unité de fixation (150, 170, 200, 220, 250, 300) est raccordée au boîtier (102), en particulier à la deuxième section de boîtier (106), lorsqu'une unité d'installation (100) est fixée sur la zone de réception (60), **caractérisée en ce que** l'unité de fixation (270) comprend une pluralité de languettes de fixation (272), qui sont maintenues sur la deuxième section de boîtier (106) et que les languettes de fixation (272) peuvent être soumises, dans une direction radiale par rapport à un axe central (78) de la deuxième section de boîtier (106), à l'action d'un corps en coin (302) et ainsi peuvent être placées sur la zone de réception (60), en particulier sur une paroi intérieure (84) du canal de réception (82), et peuvent être calées avec celle-ci.

16. Unité d'installation selon la revendication 15, **caractérisée en ce que** les languettes de fixation (272) sont formées d'une seule pièce sur la deuxième section de boîtier (106) et/ou qu'en particulier les languettes de fixation (272) s'étendent approximativement parallèlement à la direction d'insertion (142).

17. Unité d'installation selon la revendication 15 ou 16, **caractérisée en ce qu'**en particulier le corps en coin (302) est réalisé comme un corps annulaire et/ou qu'en particulier le corps en coin (302) prend appui et est guidé sur le boîtier (102), en particulier sur un couvercle de fermeture (132"') du boîtier (102), qu'en particulier le corps en coin (302) est fixé par des éléments d'encliquetage (312, 314) dans sa position exerçant une action sur les languettes de fixation (272).
